(19) Europäisches Patentamt
European Patent Office
Office européen des brevets

(11) EP 3 426 701 B1

(12) EUROPEAN PATENT SPECIFICATION

(45) Date of publication and mention of the grant of the patent:
**10.08.2022 Bulletin 2022/32**

(21) Application number: **17763821.0**

(22) Date of filing: **06.03.2017**

(51) International Patent Classification (IPC):
***C08F 214/18** (2006.01)* ***H01M 8/1023** (2016.01)*
***H01M 8/1039** (2016.01)* ***C09D 11/10** (2014.01)*
***C08F 214/26** (2006.01)* ***C08F 216/14** (2006.01)*
***C09D 11/106** (2014.01)* ***H01M 8/1018** (2016.01)*
***H01M 4/86** (2006.01)* ***H01M 4/88** (2006.01)*
***H01M 8/1004** (2016.01)*

(52) Cooperative Patent Classification (CPC):
**H01M 8/1039; C08F 214/26; C08F 216/1475; C09D 11/106; H01M 4/8668; H01M 4/8828; H01M 8/1004; H01M 8/1023;** H01M 2008/1095; H01M 2300/0082; Y02E 60/10; Y02E 60/50; Y02P 70/50

(86) International application number:
**PCT/US2017/020895**

(87) International publication number:
**WO 2017/155862 (14.09.2017 Gazette 2017/37)**

(54) **FLUORINATED COPOLYMER HAVING SULFONYL PENDANT GROUPS AND METHOD OF MAKING AN IONOMER**

FLUORIERTES COPOLYMER SULFONYLSEITENGRUPPEN UND VERFAHREN ZUR HERSTELLUNG EINES IONOMERES

COPOLYMÈRE FLUORÉ PRÉSENTANT DES GROUPES PENDANTS SULFONYLE ET PROCÉDÉ DE PRODUCTION D'UN IONOMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2016 US 201662304425 P**

(43) Date of publication of application:
**16.01.2019 Bulletin 2019/03**

(73) Proprietor: **3M Innovative Properties Company
St. Paul, MN 55133-3427 (US)**

(72) Inventors:
- **DAHLKE, Gregg D.
Saint Paul, Minnesota 55133-3427 (US)**
- **DUCHESNE, Denis
Saint Paul, Minnesota 55133-3427 (US)**
- **HINTZER, Klaus
41453 Neuss (DE)**
- **LOCHHAAS, Kai H.
41453 Neuss (DE)**
- **THALER, Arne
41453 Neuss (DE)**
- **ZIPPLIES, Tilman C.
41453 Neuss (DE)**

(74) Representative: **Mathys & Squire
Theatinerstraße 7
80333 München (DE)**

(56) References cited:
**WO-A1-2015/080294 WO-A1-2016/130894
JP-A- 2010 018 674 JP-A- 2013 181 128
JP-A- 2013 181 128 US-A- 5 912 280
US-A1- 2003 013 791 US-A1- 2005 037 265
US-A1- 2009 288 290**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 426 701 B1

## Description

### Background

Copolymers of tetrafluoroethylene and monomers polyfluorovinyloxy including sulfonyl fluoride pendant groups have been made. See, for example, U.S. Pat. Nos. 3,282,875 (Connolly), 3,718,627 (Grot), and 4,267,364 (Grot). Copolymers of fluorinated olefins and polyfluoroallyloxy sulfonyl fluorides have been made. See, for example, U.S. Pat. Nos. 4,273,729 (Krespan) and 8,227,139 (Watakabe), and International Pat. Appl. Pub. No. WO 00/24709 (Farnham et al.). Hydrolysis of the sulfonyl fluoride of these copolymers to form an acid or acid salt provides ionic copolymers.

JP2011174032, published September 8, 2011, reports a radical polymerization of a fluorine-containing monomer and a polyfluorovinyloxy comonomer having a $-SO_3Li$ group.

### Summary

While useful ionomers have been made from short-chain $SO_2F$-containing vinyl ethers (e.g., $CF_2$=CF-O-$(CF_2)_a$-$SO_2F$ in which a is 1 to 4) and other fluorinated monomers, processes for making these ionomers provide several challenges. First, short-chain $SO_2F$-containing vinyl ether monomers are difficult to prepare due to undesired side reactions. For example, decarboxylation of compounds represented by formula $CF_3C(COF)(F)$-O-$(CF_2)_{a}$-$SO_2F$ are known to form cyclic sulfones, particularly when a is 2 or 3 (see, e.g., U.S. Pat. No. 4,358,412 (Ezzell et al. and references cited therein)). Vinyl ethers can undergo termination reactions (e.g. cleavage of vinyl ether) during polymerization, in particular at higher temperatures, and creating unstable carboxy-endgroups. We have found that fluorinated copolymers made with $SO_2F$-containing perfluorinated allyl ether monomers can advantageously be produced, for example, by aqueous emulsion polymerization at higher temperatures (e.g., higher than 70 °C or 80 °C) than fluorinated copolymers made with corresponding perfluorinated $SO_2F$-containing vinyl ether monomers.

For some applications, such as fuel cell applications, fluoropolymers having pendant $-SO_2F$ groups are subsequently hydrolyzed to form $-SO_3H$ groups. This multi-step process can be time-consuming and costly. It is reported in U.S. Pat. No. 4,358,412 (Ezzell et al.) that only polymers having - $SO_2F$ groups (not in the sulfonic acid or acid salt form) are thermoplastic and can be formed into films. The present disclosure provides a more expedient method for making ionomers and ionomers made from this method. Using the method according to the present disclosure, at least a step of hydrolyzing the copolymer following polymerization may be avoided.

In one aspect, the present disclosure provides a copolymer including $-SO_2X$ end groups, divalent units represented by formula:

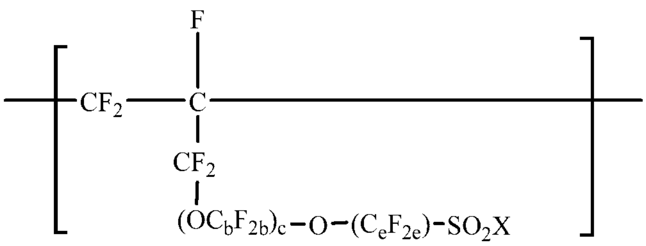

,

and one or more other, independently selected fluorinated divalent units. In this formula, b is a number from 2 to 8, c is a number from 0 to 2, and e is a number from 1 to 8. In each $-SO_2X$, X is independently F, -NZH, $-NZSO_2(CF_2)_{1-6}SO_2X'$, $-NZ[SO_2(CF_2)_aSO_2NZ]_{1-10}SO_2(CF_2)_aSO_2X'$, or -OZ, wherein each Z is independently a hydrogen, an alkali-metal cation, or a quaternary ammonium cation, X' is independently -NZH or -OZ, and each a is independently 1 to 6. The copolymer has an $-SO_2X$ equivalent weight of up to 1000. In some embodiments, the fluorinated divalent units comprise $-[CF_2-CF_2]-$.

In another aspect, the present disclosure provides a copolymer including divalent units independently represented by formula:

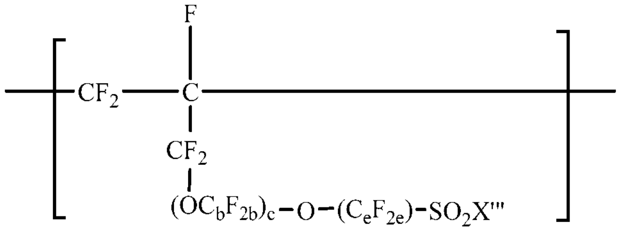

and one or more other, independently selected fluorinated divalent units. In this formula, b is 2 to 8, c is 0 to 2, e is 1 to 8, and each X‴ is independently -NZH, $-NZSO_2(CF_2)_{1-6}SO_2X'$, or $-NZ[SO_2(CF_2)_aSO_2NZ]_{1-10}SO_2(CF_2)_aSO_2X'$, wherein Z is a hydrogen, an alkali-metal cation or a quaternary ammonium cation, X' is independently -NZH or -OZ, and each a is independently 1 to 6. In some embodiments, the fluorinated divalent units comprise $-[CF_2-CF_2]-$.

In another aspect, the present disclosure provides a copolymer including $-SO_2X''$ end groups, divalent units represented by formula:

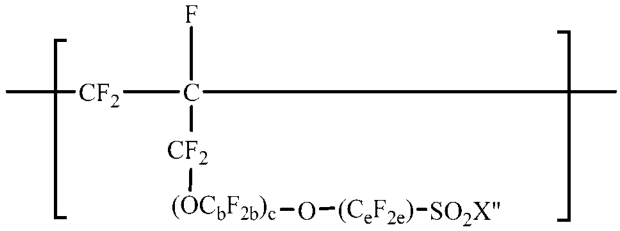
,

and one or more other, independently selected fluorinated divalent units. In this formula, b is a number from 2 to 8, c is a number from 0 to 2, and e is a number from 1 to 8. In each $-SO_2X''$, X" is independently F, -NZH, or -OZ, wherein each Z is independently a hydrogen, an alkali-metal cation, or a quaternary ammonium cation. The copolymer has an $-SO_2X''$ equivalent weight of up to 1000. In some embodiments, the fluorinated divalent units comprise $-[CF_2-CF_2]-$.

In another aspect, the present disclosure provides a method of making any of the aforementioned copolymers. The method includes copolymerizing components including at least one fluorinated olefin and a compound represented by formula $CF_2=CF-CF_2(O-C_bF_{2b})_c-O-(C_eF_{2e})-SO_2X''$, wherein b, c, and e are as defined above, and wherein X" is -F, -NZH, or -OZ.

In another aspect, the present disclosure provides a method of making an ionomer. The method includes copolymerizing components including at least one fluorinated olefin and at least one compound represented by formula $CF_2=CFCF_2-(OC_bF_{2b})_c-O-(C_eF_{2e})-SO_2X$ , wherein b is a number from 2 to 8, c is a number from 0 to 2, e is a number from 1 to 8, and X' is -NZH or -OZ, wherein each Z is independently a hydrogen, an alkali metal cation, or a quaternary ammonium cation. In some embodiments, the fluorinated olefin is tetrafluoroethylene. In some embodiments, the components include at least 60 mole % of tetrafluoroethylene based on the total amount of components.

In another aspect, the present disclosure provides an ionomer prepared by the method described above.

In another aspect, the present disclosure provides a polymer electrolyte membrane that includes the copolymer of the present disclosure or the ionomer made by the method of the present disclosure.

In another aspect, the present disclosure provides a catalyst ink that includes the copolymer of the present disclosure or the ionomer made by the method of the present disclosure.

In another aspect, the present disclosure provides a membrane electrode assembly that includes such a polymer electrolyte membrane or catalyst ink.

In another aspect, the present disclosure provides a binder for an electrochemical system that includes the copolymer of the present disclosure or the ionomer made by the method of the present disclosure.

In another aspect, the present disclosure provides a battery or electrode that includes such a binder.

In another aspect, the present disclosure provides a method of making a membrane using the ionomer made by the method described herein.

In another aspect, the present disclosure provides a method of making a catalyst ink using the ionomer made by the method described herein.

In another aspect, the present disclosure provides a method of making a binder for an electrochemical system using the ionomer made by the method described herein.

In this application:

Terms such as "a", "an" and "the" are not intended to refer to only a singular entity, but include the general class of which a specific example may be used for illustration. The terms "a", "an", and "the" are used interchangeably

with the term "at least one".

The phrase "comprises at least one of" followed by a list refers to comprising any one of the items in the list and any combination of two or more items in the list. The phrase "at least one of" followed by a list refers to any one of the items in the list or any combination of two or more items in the list.

The terms "perfluoro" and "perfluorinated" refer to groups in which all C-H bonds are replaced by C-F bonds.

The phrase "interrupted by at least one -O- group", for example, with regard to a perfluoroalkyl or perfluoroalkylene group refers to having part of the perfluoroalkyl or perfluoroalkylene on both sides of the -O- group. For example, $-CF_2CF_2-O-CF_2-CF_2-$ is a perfluoroalkylene group interrupted by an -0-.

All numerical ranges are inclusive of their endpoints and nonintegral values between the endpoints unless otherwise stated (e.g., 1 to 5 includes 1, 1.5, 2, 2.75, 3, 3.80, 4, 5, etc.).

**Detailed Description**

The copolymer according to the present disclosure includes $-SO_2X$ end groups and divalent units represented by formula:

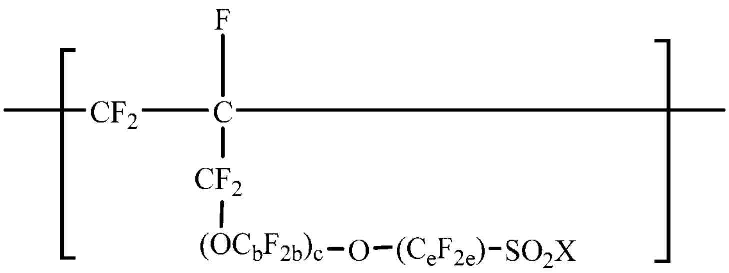
.

In this formula, b is a number from 2 to 8, c is a number from 0 to 2, and e is a number from 1 to 8. In some embodiments, b is a number from 2 to 6 or 2 to 4. In some embodiments, b is 2. In some embodiments, e is a number from 1 to 6 or 2 to 4. In some embodiments, e is 2. In some embodiments, e is 4. In some embodiments, c is 0 or 1. In some embodiments, c is 0. In some embodiments, c is 0, and e is 2 or 4. In some embodiments, b is 3, c is 1, and e is 2. $C_eF_{2e}$ may be linear or branched. In some embodiments, $C_eF_{2e}$ can be written as $(CF_2)_e$, which refers to a linear perfluoroalkylene group. When c is 2, the b in the two $C_bF_{2b}$ groups may be independently selected. However, within a $C_bF_{2b}$ group, a person skilled in the art would understand that b is not independently selected. Also in this formula and in the $-SO_2X$ end groups, X is independently F, -NZH, $-NZSO_2(CF_2)_{1-6}SO_2X'$, $-NZ[SO_2(CF_2)_aSO_2NZ]_{1-10}SO_2(CF_2)_aSO_2X'$ (in which each a is independently 1 to 6, 1 to 4, or 2 to 4), or -OZ. In some embodiments, X is independently -F, -NZH, or -OZ. In some embodiments, X is -NZH or -OZ. In some embodiments, X is -OZ. In some embodiments, X is independently -NZH, $-NZSO_2(CF_2)_{1-6}SO_2X'$, or $-NZ[SO_2(CF_2)_aSO_2NZ]_{1-10}SO_2(CF_2)_aSO_2X'$, X' is independently -NZH or -OZ (in some embodiments, -OZ). In any of these embodiments, each Z is independently a hydrogen, an alkali metal cation, or a quaternary ammonium cation. The quaternary ammonium cation can be substituted with any combination of hydrogen and alkyl groups, in some embodiments, alkyl groups independently having from one to four carbon atoms. In some embodiments, Z is an alkali-metal cation. In some embodiments, Z is a sodium or lithium cation. In some embodiments, Z is a sodium cation. Copolymers having divalent units represented by this formula can be prepared by copolymerizing components including at least one polyfluoroallyloxy compound represented by formula $CF_2=CFCF_2-(OC_bF_{2b})_c-O-(C_eF_{2e})-SO_2X''$, in which b, c, and e are as defined above in any of their embodiments, and each X" is independently -F, -NZH, or -OZ. Suitable polyfluoroallyloxy compounds of this formula include $CF_2=CFCF_2-O-CF_2-SO_2X''$, $CF_2=CFCF_2-O-CF_2CF_2-SO_2X''$, $CF_2=CFCF_2-O-CF_2CF_2CF_2-SO_2X''$, $CF_2=CFCF_2-O-CF_2CF_2CF_2CF_2-SO_2X''$, and $CF_2=CFCF_2-O-CF(CF_3)-CF_2-O-(CF_2)_e-SO_2X''$. In some embodiments, the polyfluoroallyloxy compound is $CF_2=CFCF_2-O-CF_2CF_2-SO_2X''$.

In some embodiments, the copolymer according to the present disclosure can be made from the sulfonyl fluoride compounds, where X" in any of the aforementioned polyfluoroallyloxy compounds is F, according to the methods described below, for example. In these embodiments, the $-SO_2F$ groups may be hydrolyzed or treated with ammonia using conventional methods to provide $-SO_3Z$ or $-SO_2NZH$ groups. Hydrolysis of a copolymer having $-SO_2F$ groups with an alkaline hydroxide (e.g. LiOH, NaOH, or KOH) solution provides $-SO_3Z$ groups, which may be subsequently acidified to $SO_3H$ groups. Treatment of a copolymer having $-SO_2F$ groups with water and steam can form $SO_3H$ groups.

In some embodiments, the method according to the present disclosure includes copolymerizing components including at least one compound represented by formula $CF_2=CFCF_2-(OC_bF_{2b})_c-O-(C_eF_{2e})-SO_2X$ , in which b, c, and e are as defined above in any of their embodiments. In this formula, X is -NZ'H or -OZ', wherein each Z' is independently a hydrogen, an alkali metal cation, or a quaternary ammonium cation. The quaternary ammonium cation can be substituted

with any combination of hydrogen and alkyl groups, in some embodiments, alkyl groups independently having from one to four carbon atoms. In some embodiments, Z' is an alkali-metal cation. In some embodiments, Z' is a sodium or lithium cation. In some embodiments, Z' is a sodium cation. In some embodiments, the compound represented by formula $CF_2=CFCF_2-(OC_bF_{2b})_c-O-(C_eF_{2e})-SO_2X$ is $CF_2=CFCF_2-O-CF_2CF_2-SO_3Na$.

Compounds represented by formula $CF_2=CFCF_2-(OC_bF_{2b})_c-O-(C_eF_{2e})-SO_2X$" can be made by known methods. For example acid fluorides represented by formula $FSO_2(CF_2)_{e-1}-C(O)F$ or $FSO_2(CF_2)_e-(OC_bF_{2b})_{c-1}-C(O)F$ can be reacted with perfluoroallyl chloride, perfluoroallyl bromide, or perfluoroallyl fluorosulfate in the presence of potassium fluoride as described in U.S. Pat. No. 4,273,729 (Krespan) to make compounds of formula $CF_2=CFCF_2-(OC_bF_{2b})_c-O-(C_eF_{2e})-SO_2F$. Compounds of formula $CF_2=CFCF_2-(OC_bF_{2b})_c-O-(C_eF_{2e})-SO_2F$ can be hydrolyzed with a base (e.g., alkali metal hydroxide or ammonium hydroxide) to provide a compound represented by formula $CF_2=CFCF_2-(OC_bF_{2b})_c-O-(C_eF_{2e})-SO_2X'$.

In some embodiments of the copolymer according to the present disclosure, the fluorinated divalent units are derived from at least one fluorinated olefin independently represented by formula $C(R)_2=CF-Rf$. These fluorinated divalent units are represented by formula $-[CR_2-CFRf]-$. Likewise, in some embodiments of the methods according to the present disclosure, the components to be polymerized further comprise at least one fluorinated olefin independently represented by formula $C(R)_2=CF-Rf$. In formula $C(R)_2=CF-Rf$ and $-[CR_2-CFRf]-$, Rf is fluorine or a perfluoroalkyl having from 1 to 8, in some embodiments 1 to 3, carbon atoms, and each R is independently hydrogen, fluorine, or chlorine. Some examples of fluorinated olefins useful as components of the polymerization include, tetrafluoroethylene (TFE), hexafluoropropylene (HFP), trifluorochloroethylene (CTFE), and partially fluorinated olefins (e.g., vinylidene fluoride (VDF), tetrafluoropropylene (R1234yf), pentafluoropropylene, and trifluoroethylene).

In some embodiments of the copolymer and method according to the present disclosure, the copolymer is essentially free of VDF units, and the components to be copolymerized are essentially free of VDF. For example, at a pH higher than 8, VDF may undergo dehydrofluorination, and it may be useful to exclude VDF from the components to be polymerized. "Essentially free of VDF" can mean that VDF is present in the components to be polymerized at less than 1 (in some embodiments, less than 0.5, 0.1, 0.05, or 0.01) mole percent. "Essentially free of VDF" includes being free of VDF.

In some embodiments of the copolymer according to the present disclosure, the fluorinated divalent units are derived from at least one perfluorovinyl ether (e.g., perfluoroalkyl vinyl ether (PAVE)) or perfluoroalkoxyalkyl vinyl ether (PAOVE). Likewise suitable monomers that may be included in the components to be polymerized in the methods according to the present disclosure can include perfluorovinyl ethers (e.g., PAVE and PAOVE). Any combination of a perfluoroalkyl vinyl ether, a perfluoroalkoxalkyl vinyl ether; and at least one fluoroolefin independently represented by formula $CR_2=CF-Rf$ may be useful components to be polymerized.

Suitable perfluoroalkoxyalkyl vinyl ethers include those represented by formula $CF_2=CFORf_1$, wherein $Rf_1$ is a perfluoroalkyl group having from 1 to 6, 1 to 5, 1 to 4, or 1 to 3 carbon atoms. Examples of useful perfluoroalkyl vinyl ethers include perfluoromethyl vinyl ether ($CF_2=CFOCF_3$), perfluoroethyl vinyl ether ($CF_2=CFOCF_2CF_3$), and perfluoropropyl vinyl ether ($CF_2=CFOCF_2CF_2CF_3$).

Suitable perfluoroalkoxyalkyl vinyl ethers include those represented by formula $CF_2=CF(OC_nF_{2n})_zORf_2$, in which each n is independently from 1 to 6, z is 1 or 2, and $Rf_2$ is a linear or branched perfluoroalkyl group having from 1 to 8 carbon atoms and optionally interrupted by one or more -O- groups. In some embodiments, n is from 1 to 4, or from 1 to 3, or from 2 to 3, or from 2 to 4. In some embodiments, n is 1 or 3. In some embodiments, n is 3. When z is 2, the n in the two $C_nF_{2n}$ groups may be independently selected. However, within a $C_nF_{2n}$ group, a person skilled in the art would understand that n is not independently selected. $C_nF_{2n}$ may be linear or branched. In some embodiments, $C_nF_{2n}$ can be written as $(CF_2)_n$, which refers to a linear perfluoroalkylene group. In some embodiments, $C_nF_{2n}$ is $-CF_2-CF_2-CF_2-$. In some embodiments, $C_nF_{2n}$ is branched, for example, $-CF_2-CF(CF_3)-$. In some embodiments, $(OC_nF_{2n})_z$ is represented by $-O-(CF_2)_{1-4}-[O(CF_2)_{1-4}]_{0-1}$. In some embodiments, $Rf_2$ is a linear or branched perfluoroalkyl group having from 1 to 8 (or 1 to 6) carbon atoms that is optionally interrupted by up to 4, 3, or 2 -O- groups. In some embodiments, $Rf_2$ is a perfluoroalkyl group having from 1 to 4 carbon atoms optionally interrupted by one -O- group. Examples of suitable perfluoroalkoxyalkyl vinyl ethers include $CF_2=CFOCF_2OCF_3$, $CF_2=CFOCF_2OCF_2CF_3$, $CF_2=CFOCF_2CF_2OCF_3$, $CF_2=CFOCF_2CF_2CF_2OCF_3$, $CF_2=CFOCF_2CF_2CF_2CF_2OCF_3$, $CF_2=CFOCF_2CF_2OCF_2CF_3$, $CF_2=CFOCF_2CF_2CF_2OCF_2CF_3$, $CF_2=CFOCF_2CF_2CF_2CF_2OCF_2CF_3$, $CF_2=CFOCF_2CF_2OCF_2OCF_3$, $CF_2=CFOCF_2CF_2OCF_2CF_2OCF_3$, $CF_2=CFOCF_2CF_2OCF_2CF_2CF_2OCF_3$, $CF_2=CFOCF_2CF_2OCF_2CF_2CF_2CF_2OCF_3$, $CF_2=CFOCF_2CF_2OCF_2CF_2CF_2CF_2CF_2OCF_3$, $CF_2=CFOCF_2CF_2(OCF_2)_3OCF_3$, $CF_2=CFOCF_2CF_2(OCF_2)_4OCF_3$, $CF_2=CFOCF_2CF_2OCF_2OCF_2OCF_3$, $CF_2=CFOCF_2CF_2OCF_2CF_2CF_3$ $CF_2=CFOCF_2CF_2OCF_2CF_2OCF_2CF_2CF_3$, $CF_2=CFOCF_2CF(CF_3)-O-C_3F_7$ (PPVE-2), $CF_2=CF(OCF_2CF(CF_3))_2-O-C_3F_7$ (PPVE-3), and $CF_2=CF(OCF_2CF(CF_3))_3-O-C_3F_7$ (PPVE-4). Many of these perfluoroalkoxyalkyl vinyl ethers can be prepared according to the methods described in U.S. Pat. Nos. 6,255,536 (Worm et al.) and 6,294,627 (Worm et al.).

In some embodiments of the copolymer according to the present disclosure, the fluorinated divalent units are derived from at least one perfluoroalkyl allyl ether or perfluoroalkoxyalkyl allyl ether. Likewise, perfluoroalkyl allyl ethers

and perfluoroalkoxyalkyl allyl ethers may be useful components to be polymerized in the methods according to the present disclosure. Suitable perfluoroalkoxyalkyl allyl ethers include those represented by formula $CF_2=CFCF_2(OC_nF_{2n})_zORf_2$, in which n, z, and $Rf_2$ are as defined above in any of the embodiments of perfluoroalkoxyalkyl vinyl ethers. Examples of suitable perfluoroalkoxyalkyl allyl ethers include $CF_2=CFCF_2OCF_2CF_2OCF_3$, $CF_2=CFCF_2OCF_2CF_2CF_2OCF_3$, $CF_2=CFCF_2OCF_2OCF_3$, $CF_2=CFCF_2OCF_2OCF_2CF_3$, $CF_2=CFCF_2OCF_2CF_2CF_2CF_2OCF_3$, $CF_2=CFCF_2OCF_2CF_2OCF_2CF_3$, $CF_2=CFCF_2OCF_2CF_2CF_2OCF_2CF_3$, $CF_2=CFCF_2OCF_2CF_2CF_2CF_2OCF_2CF_3$, $CF_2=CFCF_2OCF_2CF_2OCF_2OCF_3$, $CF_2=CFCF_2OCF_2CF_2OCF_2CF_2OCF_3$, $CF_2=CFCF_2OCF_2CF_2OCF_2CF_2CF_2OCF_3$, $CF_2=CFCF_2OCF_2CF_2OCF_2CF_2CF_2CF_2OCF_3$,$CF_2=CFCF_2OCF_2CF_2OCF_2CF_2CF_2CF_2CF_2OCF_3$, $CF_2=CFCF_2OCF_2CF_2(OCF_2)_3OCF_3$,$CF_2=CFCF_2OCF_2CF_2(OCF_2)_4OCF_3$, $CF_2=CFCF_2OCF_2CF_2OCF_2OCF_2OCF_3$, $CF_2=CFCF_2OCF_2CF_2OCF_2CF_2CF_3$, $CF_2=CFCF_2OCF_2CF_2OCF_2CF_2OCF_2CF_2CF_3$, $CF_2=CFCF_2OCF_2CF(CF_3)$-O-$C_3F_7$, and $CF_2=CFCF_2(OCF_2CF(CF_3))_2$-O-$C_3F_7$. Many of these perfluoroalkoxyalkyl allyl ethers can be prepared, for example, according to the methods described in U.S. Pat. No. 4,349,650 (Krespan).

The vinyl ethers and allyl ethers described above in any of their embodiments, may be present in the components to be polymerized in any useful amount, in some embodiments, in an amount of up to 10, 7.5, or 5 mole percent, based on the total amount of polymerizable components. Accordingly, the copolymer according to the present disclosure can include divalent units derived from these vinyl ethers and allyl ethers in any useful amount, in some embodiments, in an amount of up to 10, 7.5, or 5 mole percent, based on the total moles of divalent units.

In some embodiments, the fluorinated divalent units in the copolymer according to the present disclosure comprise $-[CF_2-CF_2]-$. In some embodiments, the components that are copolymerized in the methods according to the present disclosure include TFE. In some embodiments, the components that are copolymerized in the methods according to the present disclosure comprise at least 60 mole % of TFE based on the total amount of components. In some embodiments, the components comprise at least 65, 70, 75, 80, or 90 mole % of TFE based on the total amount of components. In some embodiments, the components to be polymerized in the method disclosed herein consist of tetrafluoroethylene and a compound represented by formula $CF_2=CFCF_2-O-(C_eF_{2e})-SO_2X''$ or $CF_2=CFCF_2-O-(C_eF_{2e})-SO_2X'$ in any of their embodiments described above. Other fluorinated olefins, such as any of those described above, may be present in the components to be polymerized in any useful amount, in some embodiments, in an amount of up to 10, 7.5, or 5 mole percent, based on the total amount of polymerizable components.

In some embodiments of the copolymer of the present disclosure, the fluorinated divalent units are derived from at least one of tetrafluoroethylene, tetrafluoropropylene, hexafluorpropylene, perfluoromethyl vinyl ether, perfluoropropyl vinyl ether, perfluoro-3-methoxy-n-propyl vinyl ether, tetrafluoropropene, and vinylidene fluoride. In some embodiments of the methods according to the present disclosure, the components to be polymerized comprise at least one of tetrafluoroethylene, tetrafluoropropylene, hexafluoropropylene, perfluoromethyl vinyl ether, perfluoropropyl vinyl ether, perfluoro-3-methoxy-n-propyl vinyl ether, or tetrafluoropropene.

In some embodiments of the copolymer according to the present disclosure, at least some of the fluorinated divalent units are derived from at least one short-chain $SO_2X''$-containing vinyl ether monomer. Likewise, short-chain $SO_2X''$-containing vinyl ether monomers may be useful components to be polymerized in the methods according to the present disclosure. Short-chain $SO_2X''$-containing vinyl ether monomers represented by formula $CF_2=CF-O-(CF_2)_2-SO_2X''$ (e.g., those represented by formula $[CF_2=CF-O-(CF_2)_2-SO_3]M$, where M is an alkali metal, and $CF_2=CF-O-(CF_2)_2-SO_2NZH$) can be made by known methods. Conveniently, a compound of formula $[CF_2=CF-O-(CF_2)_2-SO_3]M$ can be prepared in three steps from the known compound represented by formula $FC(O)-CF(CF_3)-O-(CF_2)_2-SO_2F$. As reported in Gronwald, O., et al; "Synthesis of difluoroethyl perfluorosulfonate monomer and its application"; J. Fluorine Chem., 2008, 129, 535-540, the acid fluoride can be combined with a methanol solution of sodium hydroxide to form the disodium salt, which can be dried and heated in dry diglyme to effect the carboxylation. $FC(O)-CF(CF_3)-O-(CF_2)_2-SO_2F$ can be prepared by ring-opening and derivatization of tetrafluoroethane-$\beta$-sultone as described in U.S. Pat. No. 4,962,292 (Marraccini et al.). Compounds represented by formula $CF_2=CF-O-(CF_2)_a-SO_2X''$ can also be prepared by hydrolyzing the products from the elimination of halogen from a compound of formula $CF_2Cl-CFCl-O-(CF_2)_2-SO_2F$ described in U.S. Pat. No. 6,388,139 (Resnick) and or hydrolyzing the products of decarboxylation of $FSO_2-(CF_2)_{3-4}-O-CF(CF_3)-\ COO^-)_pM^{+}P$ described in U.S. Pat. No. 6,624,328 (Guerra). Compounds of formula $CF_2=CF-O-(CF_2)_2-SO_2NH_2$ can be prepared, for example, by reaction of a cyclic sulfone with one equivalent of LHMDS as described by Uematsu, N., et al. "Synthesis of novel perfluorosulfonamide monomers and their application"; J. Fluorine Chem., 2006, 127, 1087-1095.

Copolymers of the present disclosure can also include units derived from bisolefins represented by formula $X_2C=CY-(CZ_2)_m-(O)_n-R_F-(O)_o-(CZ_2)_p-CY=CX_2$. Likewise, the components to be polymerized in the methods according to the present disclosure can also include perfluorinated or partially fluorinated bisolefins, which may be represented by formula $X_2C=CY-(CZ_2)_m-(O)_n-Rp-(O)_o-(CZ_2)_p-CY=CX_2$. In this formula, each of X, Y, and Z is independently fluoro, hydrogen, alkyl, alkoxy, polyoxyalkyl, perfluoroalkyl, perfluoroalkoxy or perfluoropolyoxyalkyl, m and p are independently an integer from 0 to 15, and n, o are independently 0 or 1. In some embodiments, X, Y, and Z are each independently

fluoro, $CF_3$, $C_2F_5$, $C_3F_7$, $C_4F_9$, hydrogen, $CH_3$, $C_2H_5$, $C_3H_7$, $C_4H_9$. In some embodiments, X, Y, and Z are each fluoro (e.g., as in $CF_2$=CF-O-$R_F$-O-CF=$CF_2$ and $CF_2$=CF-$CF_2$-O-$R_F$-O-$CF_2$-CF=$CF_2$). In some embodiments, n and o are 1, and the bisolefins are divinyl ethers, diallyl ethers, or vinyl-allyl ethers. $R_F$ represents linear or branched perfluoroalkylene or perfluoropolyoxyalkylene or arylene, which may be non-fluorinated or fluorinated. In some embodiments, $R_F$ is perfluoroalkylene having from 1 to 12, from 2 to 10, or from 3 to 8 carbon atoms. The arylene may have from 1 to 14, 1 to 12, or 1 to 10 carbon atoms and may be non-substituted or substituted with one or more halogens other than fluoro, perfluoroalkyl (e.g. -$CF_3$ and -$CF_2CF_3$), perfluoroalkoxy (e.g. -O-$CF_3$, -$OCF_2CF_3$), perfluoropolyoxyalkyl (e.g., -$OCF_2OCF_3$; -$CF_2OCF_2OCF_3$), fluorinated, perfluorinated, or non-fluorinated phenyl or phenoxy, which may be substituted with one or more perfluoroalkyl, perfluoroalkoxy, perfluoropolyoxyalkyl groups, one or more halogens other than fluoro, or combinations thereof. In some embodiments, $R_F$ is phenylene or mono-, di-, tri- or tetrafluoro-phenylene, with the ether groups linked in the ortho, para or meta position. In some embodiments, $R_F$ is $CF_2$; $(CF_2)_q$ wherein q is 2, 3, 4, 5, 6, 7 or 8; $CF_2$-O-$CF_2$; $CF_2$-O-$CF_2$-$CF_2$; CF($CF_3$); $(CF_2)_2$-O-CF($CF_3$)-$CF_2$; CF($CF_3$)-$CF_2$-O-CF($CF_3$); or $(CF_2)_2$-O-CF($CF_3$)-$CF_2$-O-CF($CF_3$)-$CF_2$-O-$CF_2$. The bisolefins can introduce long chain branches as described in U.S. Pat. Appl. Pub. No. 2010/0311906 (Lavallée et al.). The bisolefins, described above in any of their embodiments, may be present in the components to be polymerized in any useful amount, in some embodiments, in an amount of up to 2, 1, or 0.5 mole percent and in an amount of at least 0.1 mole percent, based on the total amount of polymerizable components.

Copolymers of the present disclosure can also include units derived from non-fluorinated monomers. Likewise, non-fluorinated monomers may also be useful as components to be polymerized in the methods disclosed herein. Examples of suitable non-fluorinated monomers include ethylene, propylene, isobutylene, ethyl vinyl ether, vinyl benzoate, ethyl allyl ether, cyclohexyl allyl ether, norbornadiene, crotonic acid, an alkyl crotonate, acrylic acid, an alkyl acrylate, methacrylic acid, an alkyl methacrylate, and hydroxybutyl vinyl ether. Any combination of these non-fluorinated monomers may be useful. In some embodiments, the components to be polymerized further include acrylic acid or methacrylic acid, and the copolymer of the present disclosure includes units derived from acrylic acid or methacrylic acid.

The copolymer according to the present disclosure and the ionomer made by the method of the present disclosure can have an -$SO_2$X equivalent weight of up to 1000, 900, 800, 750, 700, or 600. In some embodiments, the copolymer or ionomer has an -$SO_2$X equivalent weight of at least 400. In general, the -$SO_2$X equivalent weight of the copolymer refers to the weight of the copolymer containing one mole of-$SO_2$X groups, wherein X is as defined above in any of its embodiments. In some embodiments, the -$SO_2$X equivalent weight of the copolymer refers to the weight of the copolymer that will neutralize one equivalent of base. In some embodiments, the -$SO_2$X equivalent weight of the copolymer refers to the weight of the copolymer containing one mole of sulfonate groups (i.e., -$SO_3^-$). Decreasing the -$SO_2$X equivalent weight of the copolymer or ionomer tends to increase electrical conductivity in the copolymer or ionomer but tends to decrease its crystallinity, which may compromise the mechanical properties of the copolymer. Thus, the -$SO_2$X equivalent weight may be selected based on a balance of the requirements for the electrical and mechanical properties of the copolymer or ionomer. In some embodiments, the -$SO_2$X equivalent weight of the copolymer refers to the weight of the copolymer containing one mole of sulfonamide groups (i.e., -$SO_2$NH). Sulfonimide groups (e.g., when X is -$NZSO_2(CF_2)_{1-6}SO_2X'$ and -$NZ[SO_2(CF_2)_aSO_2NZ]_{1-10}SO_2(CF_2)_aSO_2X'$) also function as acid groups that can neutralize base as described in further detail below. The effect equivalent weight of copolymers including these groups can be much lower than 1000. Equivalent weight can be calculated from the molar ratio of monomer units in the copolymer using, for example, the equation shown in the Examples, below.

The copolymer according to the present disclosure can have up to 40 mole percent of divalent units represented by formula

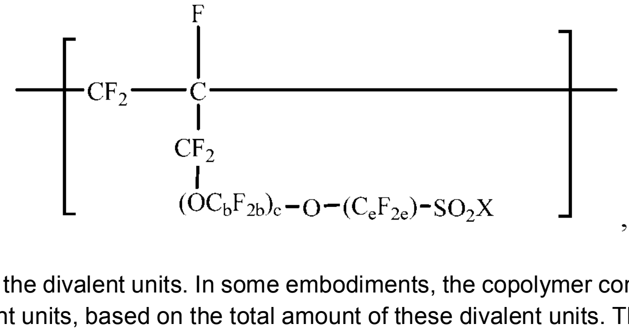

,

based on the total amount of the divalent units. In some embodiments, the copolymer comprises up to 35, 30, 25, or 20 mole percent of these divalent units, based on the total amount of these divalent units. The components that are copolymerized in the methods according to the present disclosure comprise up to 40 mole percent of at least one compound represented by formula $CF_2$=$CFCF_2$-$(OC_bF_{2b})_c$-O-$(C_eF_{2e})$-$SO_2X''$ or $CF_2$=$CFCF_2$-$(OC_bF_{2b})_c$-O-$(C_eF_{2e})$-$SO_2X'$, in any of their embodiments described above, based on the total amount of components. In some embodiments, the components comprise up to 35, 30, 25, or 20 mole percent of a compound represented by formula $CF_2$=$CFCF_2$-$(OC_bF_{2b})_c$-O-$(C_eF_{2e})$-$SO_2X''$ or $CF_2$=$CFCF_2$-$(OC_bF_{2b})_c$-O-$(C_eF_{2e})$-$SO_2X'$, based on the total amount of

components.

In some embodiments, including embodiments in which a lower equivalent weight is desired, the copolymer or ionomer may be crosslinked to improve, for example, its durability. One useful method of crosslinking is e-beam crosslinking a copolymer that includes chloro, bromo, or iodo groups as described in U.S. Pat. No. 7,265,162 (Yandrasits et al.). Incorporating chloro, bromo, or iodo groups, in some embodiments, bromo or iodo groups, into the copolymer prepared by the method disclosed herein can be carried out by including compounds having formula $CX_2$=CX(W) in the components to be polymerized. In formula $CX_2$=CX(W), each X is independently H or F, and W is I, Br, or $R_f$-W, wherein W is I or Br and $R_f$ is a perfluorinated or partially perfluorinated alkylene group optionally containing O atoms. Examples of useful monomers of formula $CX_2$=CX(Z) include $CF_2$=CHI, $CF_2$=CFI, $CF_2$=$CFCF_2I$, $CF_2$=$CFCF_2CF_2I$, $CF_2$=$CFOCF_2CF_2I$, $CF_2$=$CFOCF_2CF_2CF_2I$, $CF_2$=$CFOCF_2CF_2CF_2CF_2I$, $CF_2$=$CFO(CF_2)_3OCF_2CF_2I$, $CF_2$=CHBr, $CF_2$=CFBr, $CF_2$=$CFCF_2Br$, $CF_2$=$CFOCF_2CF_2Br$, $CF_2$=CFCl, $CF_2$=$CFCF_2Cl$, or a mixture thereof. E-beam crosslinking may be carried out on the copolymer, for example, after it is formed into a membrane as described below.

The methods of making the copolymer an ionomer can be carried out by free-radical polymerization. Conveniently, in some embodiments, the methods of making the copolymer and ionomer disclosed herein includes radical aqueous emulsion polymerization.

In some embodiments of the methods of making the copolymer and ionomer according to the present disclosure, a water-soluble initiator (e.g., potassium permanganate or a peroxy sulfuric acid salt) can be useful to start the polymerization process. Salts of peroxy sulfuric acid, such as ammonium persulfate or potassium persulfate, can be applied either alone or in the presence of a reducing agent, such as bisulfites or sulfinates (e.g., fluorinated sulfinates disclosed in U.S. Pat. Nos. 5,285,002 and 5,378,782, both to Grootaert) or the sodium salt of hydroxy methane sulfinic acid (sold under the trade designation "RONGALIT", BASF Chemical Company, New Jersey, USA). The choice of initiator and reducing agent, if present, will affect the end groups of the copolymer. The concentration range for the initiators and reducing agent can vary from 0.01% to 5% by weight based on the aqueous polymerization medium.

In the method of making the copolymer according to the present disclosure and in some embodiments of the method of making the ionomer, $-SO_2X$ end groups are introduced in the copolymers according to the present disclosure by generating $SO_3^-$ radicals during the polymerization process. When salts of peroxy sulfuric acid are used in the presence of a sulfite or bisulfite salt (e.g., sodium sulfite or potassium sulfite), $SO_3^-$ radicals are generated during the polymerization process, resulting in $-SO_3^-$ end groups. It might be useful to add metal ions to catalyze or accelerate the formation of $-SO_3^-$ radicals. By altering the stoichiometry of the sulfite or bisulfite salt versus the peroxy sulfuric acid salt, one can vary the amount of -S02X end groups.

Most of the initiators described above and any emulsifiers that may be used in the polymerization have an optimum pH-range where they show most efficiency. Also, a pH can be selected for the method according to the present disclosure such that the polymerization is carried out with the salt form of the compound of formula $CF_2$=$CFCF_2$-$(OC_bF_{2b})_c$-O-$(C_eF_{2e})$-$SO_2X$ , wherein X' is an alkali metal cation or an ammonium cation, and to maintain the salt form of the copolymer. For these reason, buffers may be useful. Buffers include phosphate, acetate, or carbonate (e.g., $(NH_4)_2CO_3$ or $NaHCO_3$) buffers or any other acid or base, such as ammonia or alkali-metal hydroxides. In some embodiments, the copolymerizing is carried out at a pH of at least 8, higher than 8, at least 8.5, or at least 9. The concentration range for the initiators and buffers can vary from 0.01% to 5% by weight based on the aqueous polymerization medium. In some embodiments, ammonia is added to the reaction mixture in an amount to adjust the pH to at least 8, higher than 8, at least 8.5, or at least 9.

Typical chain-transfer agents like $H_2$, lower alkanes, alcohols, ethers, esters, and methylene fluoride may be useful in the preparation of the copolymer and ionomer according to the present disclosure. Termination primarily via chain-transfer results in a polydispersity of about 2.5 or less. In some embodiments of the method according to the present disclosure, the polymerization is carried out without any chain-transfer agents. A lower polydispersity can sometimes be achieved in the absence of chain-transfer agents. Recombination typically leads to a polydispersity of about 1.5 for small conversions.

Useful polymerization temperatures can range from 40 °C to 150 °C. Typically, polymerization is carried out in a temperature range from 40 °C to 120 °C, 70 °C to 100 °C, or 80 °C to 90 °C. The polymerization pressure is usually in the range of 0.8 MPa to 2.5 MPa, 1 MPa to 2.5 MPa, and in some embodiments is in the range from 1.0 MPa to 2.0 MPa. Fluorinated monomers such as HFP can be precharged and fed into the reactor as described, for example, in Modern Fluoropolymers, ed. John Scheirs, Wiley & Sons, 1997, p. 241. Perfluoroalkoxyalkyl vinyl ethers represented by formula $CF_2$=$CF(OC_nF_{2n})_zORf_2$ and perfluoroalkoxyalkyl allyl ethers represented by formula $CF_2$=$CFCF_2(OC_nF_{2n})_zORf_2$, wherein n, z, and $Rf_2$ are as defined above in any of their embodiments, are typically liquids and may be sprayed into the reactor or added directly, vaporized, or atomized.

Conveniently, in the methods of making the copolymer and ionomer according to the present disclosure, the polymerization process may be conducted with no emulsifier (e.g., no fluorinated emulsifier). Surprisingly, we have found that even with the incorporation of liquid perfluoroalkoxyalkyl vinyl or perfluoroalkoxyalkyl allyl ethers or bisolefins in larger amounts, no fluorinated emulsifier is needed to ensure proper incorporation of these monomers. It can be useful

to feed the compound represented by formula $CF_2$=$CFCF_2$-$(OC_bF_{2b})_c$-O-$(C_eF_{2e})$-$SO_2X$" and the non-functional comonomers (e.g., perfluoroalkoxyalkyl vinyl or perfluoroalkoxyalkyl allyl ethers or bisolefins) as a homogenous mixture to the polymerization. In some embodiments, it is possible to hydrolyze some of the $CF_2$=$CFCF_2$-$(OC_bF_{2b})_c$-O-$(C_eF_{2e})$-$SO_2F$ (e.g., up to 5 ppm) to obtain an "in situ"-emulsifier. Advantageously, this method may be conducted in the absence of any other fluorinated emulsifiers.

In some embodiments, however, perfluorinated or partially fluorinated emulsifiers may be useful. Generally these fluorinated emulsifiers are present in a range from about 0.02% to about 3% by weight with respect to the polymer. Polymer particles produced with a fluorinated emulsifier typically have an average diameter, as determined by dynamic light scattering techniques, in range of about 10 nanometers (nm) to about 300 nm, and in some embodiments in range of about 50 nm to about 200 nm. Examples of suitable emulsifiers include perfluorinated and partially fluorinated emulsifier having the formula $[R_f\text{-O-L-COO}^-]_iX^{i+}$ wherein L represents a linear partially or fully fluorinated alkylene group or an aliphatic hydrocarbon group, $R_f$ represents a linear partially or fully fluorinated aliphatic group or a linear partially or fully fluorinated aliphatic group interrupted with one or more oxygen atoms, $X^{i+}$ represents a cation having the valence i and i is 1, 2 or 3. (See, e.g., U.S. Pat. No. 7,671,112 to Hintzer et al.). Additional examples of suitable emulsifiers also include perfluorinated polyether emulsifiers having the formula $CF_3$-$(OCF_2)_x$-O-$CF_2$-X', wherein x has a value of 1 to 6 and X' represents a carboxylic acid group or salt thereof, and the formula $CF_3$-O-$(CF_2)_3$-$(OCF(CF_3)$-$CF_2)_y$-O-L-Y' wherein y has a value of 0, 1, 2 or 3, L represents a divalent linking group selected from -$CF(CF_3)$-, -$CF_2$-, and-$CF_2CF_2$-, and Y' represents a carboxylic acid group or salt thereof. (See, e.g., U.S. Pat. Publ. No. 2007/0015865 to Hintzer et al.). Other suitable emulsifiers include perfluorinated polyether emulsifiers having the formula $R_f$-$O(CF_2CF_2O)_xCF_2COOA$ wherein $R_f$ is $C_bF_{(2b+1)}$; where b is 1 to 4, A is a hydrogen atom, an alkali metal or $NH_4$, and x is an integer of from 1 to 3. (See, e.g., U.S. Pat. Publ. No. 2006/0199898 to Funaki et al.). Suitable emulsifiers also include perfluorinated emulsifiers having the formula $F(CF_2)_bO(CF_2CF_2O)_xCF_2COOA$ wherein A is a hydrogen atom, an alkali metal or $NH_4$, b is an integer of from 3 to 10, and x is 0 or an integer of from 1 to 3. (See, e.g., U.S. Pat. Publ. No. 2007/0117915 to Funaki et al.). Further suitable emulsifiers include fluorinated polyether emulsifiers as described in U.S. Pat. No. 6,429,258 to Morgan et al. and perfluorinated or partially fluorinated alkoxy acids and salts thereof wherein the perfluoroalkyl component of the perfluoroalkoxy has 4 to 12 carbon atoms, or 7 to 12 carbon atoms. (See, e.g., U.S. Pat. No. 4,621,116 to Morgan). Suitable emulsifiers also include partially fluorinated polyether emulsifiers having the formula $[R_f\text{-}(O)_t\text{-CHF-}(CF_2)_x\text{-COO-}]_iX^{i+}$ wherein $R_f$ represents a partially or fully fluorinated aliphatic group optionally interrupted with one or more oxygen atoms, t is 0 or 1 and x is 0 or 1, $X^{i+}$ represents a cation having a valence i and i is 1, 2 or 3. (See, e.g., U.S. Pat. Publ. No. 2007/0142541 to Hintzer et al.). Further suitable emulsifiers include perfluorinated or partially fluorinated ether-containing emulsifiers as described in U.S. Pat. Publ. Nos. 2006/0223924, 2007/0060699, and 2007/0142513 each to Tsuda et al. and 2006/0281946 to Morita et al. Fluoroalkyl, for example, perfluoroalkyl carboxylic acids and salts thereof having 6-20 carbon atoms, such as ammonium perfluorooctanoate (APFO) and ammonium perfluorononanoate (see, e.g., U.S. Pat. No. 2,559,752 to Berry) may also be useful. Conveniently, in some embodiments, the method of making the copolymer according to the present disclosure may be conducted in the absence of any of these emulsifiers or any combination thereof.

If fluorinated emulsifiers are used, the emulsifiers can be removed or recycled from the fluoropolymer latex, if desired, as described in U.S. Pat. Nos. 5,442,097 to Obermeier et al., 6,613,941 to Felix et al., 6,794,550 to Hintzer et al., 6,706,193 to Burkard et al., and 7,018,541 to Hintzer et al.

In some embodiments, the obtained copolymer or ionomer latices are purified by at least one of anion- or cation-exchange processes to remove functional comonomers, anions, and/or cations before coagulation or spray drying (described below). As used herein, the term "purify" refers to at least partially removing impurities, regardless of whether the removal is complete. Anionic species that may constitute impurities include, for example, fluoride, anionic residues from surfactants and emulsifiers (e.g., perfluorooctanoate), and residual compounds represented by formula $CF_2$=$CFCF_2$-$(OC_bF_{2b})_c$-O-$(C_eF_{2e})$-$SO_2X'$, It should be noted, however, that it may be desirable to not remove ionic fluoropolymer from the dispersion. Useful anion exchange resins typically comprise a polymer (typically crosslinked) that has a plurality of cationic groups (e.g., quaternary alkyl ammonium groups) paired with various anions (e.g., halide or hydroxide). Upon contact with the fluoropolymer dispersion, anionic impurities in the dispersion become associated with the anion exchange resin. After the anion exchange step, the resultant anion-exchanged dispersion is separated from the anion exchange resin, for example, by filtration. It was reported in U.S. Pat. No. 7,304,101 (Hintzer et al.) that the anionic hydrolyzed fluoropolymer does not appreciably become immobilized on the anion exchange resin, which would lead to coagulation and/or material loss. Anionic exchange resins are available commercially from a variety of sources. If the anion exchange resin is not in the hydroxide form it may be at least partially or fully converted to the hydroxide salt form before use. This is typically done by treating the anion exchange resin with an aqueous ammonia or sodium hydroxide solution. Typically, better yields are obtained using gel-type anion-exchange resins than with macroporous anion exchange resins.

Examples of cationic impurities resulting from the abovementioned polymerization include one or more of, alkali metal cation(s) (e.g., $Li^+$, $Na^+$, $K^+$), ammonium, quaternary alkyl ammonium, alkaline earth cations (e.g., $Mg^{2+}$, $Ca^{2+}$),

and Group III metal cations. Useful cation exchange resins include polymers (typically cross-linked) that have a plurality of pendant anionic or acidic groups such as, for example, polysulfonates or polysulfonic acids, polycarboxylates or polycarboxylic acids. Examples of useful sulfonic acid cation exchange resins include sulfonated styrene-divinylbenzene copolymers, sulfonated crosslinked styrene polymers, phenol-formaldehyde-sulfonic acid resins, and benzene-formaldehyde-sulfonic acid resins. Carboxylic acid cation exchange resin is an organic acid, cation exchange resin, such as carboxylic acid cation exchange resin. Cation exchange resins are available commercially from a variety of sources. Cation exchange resins are commonly supplied commercially in either their acid or their sodium form. If the cation exchange resin is not in the acid form (i.e., protonated form) it may be at least partially or fully converted to the acid form in order to avoid the generally undesired introduction of other cations into the dispersion. This conversion to the acid form may be accomplished by means well known in the art, for example by treatment with any adequately strong acid.

If purification of the fluoropolymer dispersion is carried out using both anion and cation exchange processes, the anion exchange resin and cation exchange resin may be used individually or in combination as, for example, in the case of a mixed resin bed having both anion and cation exchange resins.

The obtained copolymer or ionomer dispersion after aqueous emulsion polymerization and optional ion-exchange purification can be used as is or, if higher solids are desired, can be upconcentrated. Typically, if the copolymer or ionomer dispersion is to be used to form a membrane, the concentration of ionic fluoropolymer is increased to a high level (e.g., at least 20, 30, or 40 percent by weight).

To coagulate the obtained copolymer or ionomer latex, any coagulant which is commonly used for coagulation of a fluoropolymer latex may be used, and it may, for example, be a water-soluble salt (e.g., calcium chloride, magnesium chloride, aluminum chloride or aluminum nitrate), an acid (e.g., nitric acid, hydrochloric acid or sulfuric acid), or a water-soluble organic liquid (e.g., alcohol or acetone). The amount of the coagulant to be added may be in a range of 0.001 to 20 parts by mass, for example, in a range of 0.01 to 10 parts by mass per 100 parts by mass of the latex. Alternatively or additionally, the latex may be frozen for coagulation or mechanically coagulated, for example, with a homogenizer as described in U.S. Pat. No. 5,463,021 (Beyer et al.). Alternatively or additionally, the latex may be coagulated by adding polycations. It may also be useful to avoid acids and alkaline earth metal salts as coagulants to avoid metal contaminants. To avoid coagulation altogether and any contaminants from coagulants, spray drying the latex after polymerization and optional ion-exchange purification may be useful to provide solid copolymer or ionomer.

A coagulated copolymer or ionomer can be collected by filtration and washed with water. The washing water may, for example, be ion-exchanged water, pure water, or ultrapure water. The amount of the washing water may be from 1 to 5 times by mass to the copolymer or ionomer, whereby the amount of the emulsifier attached to the copolymer can be sufficiently reduced by one washing.

The copolymer or ionomer produced can have less than 50 ppm metal ion content, in some embodiments, less than 25 ppm, less than 10 ppm, less than 5 ppm, or less than 1 ppm metal ion content. Specifically, metal ions such as alkali metals, alkaline earth metal, heavy metals (e.g., nickel, cobalt, manganese, cadmium, and iron) can be reduced. To achieve a metal ion content of less than 50 ppm, 25 ppm, 10 ppm. 5 ppm, or 1 ppm, polymerization can be conducted in the absence of added metal ions. For example, potassium persulfate, a common alternative initiator or co-initiator with ammonium persulfate, is not used, and mechanical and freeze coagulation described above may be used instead of coagulation with metal salts. It is also possible to use organic initiators as disclosed in U.S. Pat. No. 5,182,342 (Feiring et al.). To achieve such low ion content, ion exchange can be used, as described above, and the water for polymerization and washing may be deionized.

The metal ion content of the copolymer can be measured by flame atomic absorption spectrometry after combusting the copolymer and dissolving the residue in an acidic aqueous solution. For potassium as the analyte, the lower detection limit is less than 1 ppm.

In some embodiments of the methods of making the copolymer or ionomer according to the present disclosure, radical polymerization also can be carried out by suspension polymerization. Suspension polymerization will typically produce particle sizes up to several millimeters.

In some embodiments, the methods of making the copolymer or ionomer according to the present disclosure includes copolymerizing components including at least one compound represented by formula $CF_2{=}CFCF_2\text{-}(OC_bF_{2b})_c\text{-}O\text{-}(C_eF_{2e})\text{-}SO_2X$ , optionally purifying the copolymer by ion-exchange purification, and spray drying the resulting dispersion. In contrast, a typical method for making ionomers can include copolymerizing components including short-chain $SO_2F$-containing allyl ethers (e.g., $CF_2{=}CFCF_2\text{-}(OC_bF_{2b})_c\text{-}O\text{-}(C_eF_{2e})\text{-}SO_2F$), isolating a solid from the polymer dispersion, hydrolyzing the polymer, optionally purifying the polymer by ion exchange purification, and drying the resulting polymer. Thus, the method of the present disclosure can conveniently eliminate the steps of isolating solid polymer and hydrolyzing, resulting in a more efficient and cost-effective process.

The components to be polymerized in the methods according to the present disclosure can include more than one compound represented by formula $CF_2{=}CFCF_2\text{-}(OC_bF_{2b})_c\text{-}O\text{-}(C_eF_{2e})\text{-}SO_2X''$. When more than one compound represented by formula $CF_2{=}CFCF_2\text{-}(OC_bF_{2b})_c\text{-}O\text{-}(C_eF_{2e})\text{-}SO_2X$ is present, each of b, c, e, and X" may be independently selected. In some embodiments, the components include compounds represented by formula

$CF_2=CFCF_2-(OC_bF_{2b})_c-O-(C_eF_{2e})-SO_3Z$ and $CF_2=CFCF_2-(OC_bF_{2b})_c-O-(C_eF_{2e})-SO_2NZH$, wherein each b, c, and e is independently selected. The ratio between $SO_3Z$ and $SO_2NZH$-containing components may range from 99:1 to 1:99. In some of these embodiments, each Z is independently an alkali-metal cation or a quaternary ammonium cation.

In some embodiments of the methods according to the present disclosure, compounds represented by formula $CF_2=CFCF_2-(OC_bF_{2b})_c-O-(C_eF_{2e})-SO_2X'$ are not prepared *in situ* from compounds represented by formula $CF_2=CFCF_2-(OC_bF_{2b})_c-O-(C_eF_{2e})-SO_2F$. In some embodiments, the components to be polymerized in the method disclosed herein are substantially free of compounds represented by formula $CF_2=CFCF_2-(OC_bF_{2b})_c-O-(CF_2)_e-SO_2F$. In this regard, "substantially free of compounds represented by formula $CF_2=CFCF_2-(OC_bF_{2b})_c-O-(C_eF_{2e})-SO_2F$ may mean that the components to be polymerized in the method disclosed herein are free of compounds represented by formula $CF_2=CFCF_2-(OC_bF_{2b})_c-O-(C_eF_{2e})-SO_2F$ or that such compounds are present in an amount of up to 5, 4, 3, 2, 1, 0.5, 0.1, 0.05, or 0.01 mole percent, based on the total amount of components.

In other embodiments, a copolymer of the present disclosure can be made by copolymerizing a compound represented by formula $CF_2=CFCF_2-(OC_bF_{2b})_c-O-(C_eF_{2e})-SO_2F$ and fluorinated monomers as described above in any of their embodiments. In these embodiments, it is possible to hydrolyze some of the $CF_2=CFCF_2-(OC_bF_{2b})_c-O-(C_eF_{2e})-SO_2F$ (e.g., up to 5 ppm) to obtain an "in situ"-emulsifier as described above.

Fluoropolymers obtained by aqueous emulsion polymerization with inorganic initiators (e.g. persulfates, $KMnO_4$, etc.) typically have a high number of unstable carbon-based end groups (e.g. more than 200 -COOM or -COF end groups per $10^6$ carbon atoms, wherein M is hydrogen, a metal cation, or $NH_2$). For fluorinated ionomers useful, for example, in an electrochemical cell, the effect naturally increases as sulfonate equivalent weight decreases. These carbonyl end groups are vulnerable to peroxide radical attacks, which reduce the oxidative stability of the fluorinated ionomers. During operation of a fuel cell, electrolysis cell, or other electrochemical cell, peroxides can be formed. This degrades the fluorinated ionomers, and correspondingly reduces the operational life of the given electrolyte membrane.

As polymerized, the copolymer according to the present disclosure and the ionomer prepared by the method disclosed herein can have up to 400 -COOM and -COF end groups per $10^6$ carbon atoms, wherein M is independently an alkyl group, a hydrogen atom, a metallic cation, or a quaternary ammonium cation. Advantageously, in some embodiments, the copolymers according to the present disclosure and the ionomer prepared by the method according to the present disclosure have up to 200 unstable end groups per $10^6$ carbon atoms. The unstable end groups are -COOM or -COF groups, wherein M is an alkyl group, a hydrogen atom, a metallic cation, or a quaternary ammonium cation. In some embodiments, the copolymers and ionomers have up to 150, 100, 75, 50, 40, 30, 25, 20, 15, or 10 unstable end groups per $10^6$ carbon atoms. The number of unstable end groups can be determined by Fourier-transform infrared spectroscopy using the method described below. In some embodiments, the copolymers and ionomers according to the present disclosure and/or prepared by the method according to the present disclosure have up to 50 (in some embodiments, up to 40, 30, 25, 20, 15, or 10) unstable end groups per $10^6$ carbon atoms, as polymerized.

Copolymers according to the present disclosure and ionomers made according to some embodiments of the method disclosed herein have $-SO_2X$ end groups. As described above, $-SO_2X$ end groups can be introduced in the copolymers according to the present disclosure by generating $SO_3^-$ radicals during the polymerization process. In some embodiments, the copolymer according to the present disclosure has at least 5, 10, 15, 20, 25 30, 35, 40, or 50 $-SO_2X$ end groups per $10^6$ carbon atoms, wherein X is as defined above in any of its embodiments.

In some embodiments, reducing the number of unstable end groups can be accomplished by carrying out the polymerization in the method disclosed herein in the presence of a salt or pseudohalogen as described in U.S. Pat. No. 7,214,740 (Lochhaas et al.). Suitable salts can include a chloride anion, a bromide anion, an iodide anion, or a cyanide anion and a sodium, potassium, or ammonium cation. The salt used in the free-radical polymerization may be a homogenous salt or a blend of different salts. Examples of useful pseudohalogens nitrile-containing compounds, which provide nitrile end groups. Pseudohalogen nitrile-containing compounds have one or more nitrile groups and function in the same manner as compounds in which the nitrile groups are replaced with a halogen. Examples of suitable pseudohalogen nitrile-containing compounds include NC-CN, NC-S-S-CN, NCS-CN, Cl-CN, Br-CN, I-CN, NCN=NCN, and combinations thereof. During the free-radical polymerization, the reactive atoms/groups of the salts or the nitrile groups of the pseudohalogens chemically bond to at least one end of the backbone chain of the fluoropolymer. This provides $CF_2Y^1$ end groups instead of carbonyl end groups, wherein $Y^1$ is chloro, bromo, iodo, or nitrile. For example, if the free-radical polymerization is performed in the presence of a KCl salt, at least one of the end groups provided would be a $-CF_2Cl$ end group. Alternatively, if the free-radical polymerization is performed in the presence of a NC-CN pseudohalogen, at least one of the end groups provided would be a $-CF_2CN$ end group.

Post-fluorination with fluorine gas is also commonly used to cope with unstable end groups and any concomitant degradation. Post-fluorination of the fluoropolymer can convert -COOH, amide, hydride, -COF, $-CF_2Y^1$ and other non-perfluorinated end groups or $-CF=CF_2$ to $-CF_3$ end groups. The post-fluorination may be carried out in any convenient manner. The post-fluorination can be conveniently carried out with nitrogen/fluorine gas mixtures in ratios of 75 - 90 : 25 - 10 at temperatures between 20 °C and 250 °C, in some embodiments in a range of 150 °C to 250 °C or 70 °C to 120 °C, and pressures from 100 KPa to 1000 KPa. Reaction times can range from about four hours to about 16 hours.

Under these conditions, most unstable carbon-based end groups are removed, whereas $-SO_2X$ groups mostly survive and are converted to $-SO_2F$ groups. In some embodiments, post-fluorination is not carried out when non-fluorinated monomers described above are used as monomers in the polymerization.

The groups $Y^1$ in the end groups $-CF_2Y^1$, described above, are reactive to fluorine gas, which reduces the time and energy required to poly-fluorinate the copolymers in these embodiments. We have also found that the presence of alkali-metal cations in the copolymer increases the decomposition rate of unstable carboxylic end-groups and therefore makes a subsequent post-fluorination step, if needed, easier, faster, and cheaper.

For copolymers in which the $-SO_2X$ groups are $-SO_2F$ groups, the copolymer can be treated with an amine (e.g., ammonia) to provide a sulfonamide (e.g., having $-SO_2NH_2$ groups). Sulfonamides made in this manner or prepared by using $CF_2=CFCF_2-(OC_bF_{2b})_c-O-(CF_2)_e-SO_2NH_2$ in the components that are polymerized as described above can be further reacted with multi-functional sulfonyl fluoride or sulfonyl chloride compounds. Examples of useful multi-functional compounds include 1,1,2,2-tetrafluoroethyl-1,3-disulfonyl fluoride; 1,1,2,2,3,3-hexafluoropropyl-1,3-disulfonyl fluoride; 1,1,2,2,3,3,4,4-octafluorobutyl-1,4-disulfonyl fluoride; 1,1,2,2,3,3,4,4,5,5-perfluorobutyl-1,5-disulfonyl fluoride; 1,1,2,2-tetrafluoroethyl-1,2-disulfonyl chloride; 1,1,2,2,3,3-hexafluoropropyl-1,3-disulfonyl chloride; 1,1,2,2,3,3,4,4-octafluorobutyl-1,4-disulfonyl chloride; and 1,1,2,2,3,3,4,4,5,5-perfluorobutyl-1,5-disulfonyl chloride. After hydrolysis of the sulfonyl halide groups, the resulting copolymer, in which X is $-NZSO_2(CF_2)_{1-6}SO_3Z$, can have a higher number of ionic groups than the copolymer as polymerized. Thus, the number of ionic groups can be increased and the equivalent weight decreased without affecting the backbone structure of the copolymer. Also, using a deficient amount multi-functional sulfonyl fluoride or sulfonyl chloride compounds can result in crosslinking of the polymer chains, which may be useful to improve durability in some cases (e.g., for copolymers having low equivalent weights). Further details can be found, for example, in U.S. Pat. Appl. Publ. No. 20020160272 (Tanaka et al.). To prevent such crosslinking, if desired, copolymers bearing $-SO_2NH_2$ groups can be treated with compounds represented by formula $FSO_2(CF_2)_{1-6}SO_3H$, which can be made by hydrolyzing any of the multi-functional sulfonyl fluorides or sulfonyl chlorides described above with one equivalent of water in the presence of base (e.g., N,N-diisopropylethylamine (DIPEA)) as described in JP 2011-40363, published February 24, 2011. Copolymers bearing $-SO_2NH_2$ groups can also treated with polysulfonimides represented by formula $FSO_2(CF_2)_a[SO_2NZSO_2(CF_2)_a]_{1-10}SO_2F$ or $FSO_2(CF_2)_a[SO_2NZSO_2(CF_2)_a]_{1-10}SO_3H$, wherein each a is independently 1 to 6, 1 to 4, or 2 to 4. To make a polysulfonimide, a sulfonyl halide monomer (e.g., any of those described above) and a sulfonamide monomer represented by formula $H_2NSO_2(CF_2)_aSO_2NH_2$ are made to react in the mole ratio of (k+1)/k. The reaction may be carried out, for example, in a suitable solvent (e.g., acetonitrile) at 0 °C in the presence of base. The sulfonyl halide monomer and sulfonamide monomer may have the same or different values of a, resulting in the same or different value of a for each repeating unit. The resulting product $FSO_2(CF_2)_a[SO_2NZSO_2(CF_2)_a]_{1-10}SO_2F$ may be treated with one equivalent of water in the presence of base (e.g., N,N-diisopropylethylamine (DIPEA)) to provide $FSO_2(CF_2)_a[SO_2NZSO_2(CF_2)_a]_{1-10}SO_3H$, as described in JP 2011-40363.

In other embodiments, copolymers in which the $-SO_2X$ groups are $-SO_2F$ groups can be treated with small molecule sulfonamides such as those represented by formula $NH_2SO_2(CF_2)_{1-6}SO_3Z$, wherein Z is as defined above in any of its embodiments, to provide $-SO_2NHSO_2(CF_2)_{1-6}SO_3Z$ groups. Compounds represented by formula $NH_2SO_2(CF_2)_{1-6}SO_3Z$ may be synthesized by reacting cyclic perfluorodisulfonic acid anhydrides with amines according to the methods described in U.S. Pat. No. 4,423,197 (Behr). This can also provide copolymers with very low equivalent weights.

The copolymer of the present disclosure and the ionomer made according to the method of the present disclosure may be useful, for example, in the manufacture of polymer electrolyte membranes for use in fuel cells or other electrolytic cells. The copolymer and ionomer may be formed into a polymer electrolyte membrane by any suitable method, including casting, molding, and extrusion. Typically, the membrane is cast from a latex or suspension of the copolymer or ionomer and then dried, annealed, or both. Typically, if the dispersion of copolymer or ionomer is to be used to form a membrane, the concentration of copolymer or ionomer is increased to a high level (e.g., at least 30 or 40 percent by weight) and a water-miscible organic solvent is added to facilitate film formation. Examples of water-miscible solvents include, lower alcohols (e.g., methanol, ethanol, isopropanol, n-propanol), polyols (e.g., ethylene glycol, propylene glycol, glycerol), ethers (e.g., tetrahydrofuran and dioxane), ether acetates, acetonitrile, acetone, and combinations thereof. The copolymer may be cast from a suspension. Any suitable casting method may be used, including bar coating, spray coating, slit coating, and brush coating. After forming, the membrane may be annealed, typically at a temperature of 120 °C or higher, more typically 130 °C or higher, most typically 150 °C or higher. In some embodiments of the method according to the present disclosure, a polymer electrolyte membrane can be obtained by obtaining the dispersion of the ionomer, optionally purifying the dispersion by ion-exchange purification, and concentrating the dispersion as described above to make a membrane.

In some embodiments of the copolymer of the present disclosure and ionomer made by the method according to the present disclosure, a salt of at least one of cerium, manganese or ruthenium or one or more cerium oxide or zirconium oxide compounds is added to the acid form of the polymer electrolyte before membrane formation. Typically the salt of cerium, manganese, or ruthenium and/or the cerium or zirconium oxide compound is mixed well with or

dissolved within the polymer electrolyte to achieve substantially uniform distribution.

The salt of cerium, manganese, or ruthenium may comprise any suitable anion, including chloride, bromide, hydroxide, nitrate, sulfonate, acetate, phosphate, and carbonate. More than one anion may be present. Other salts may be present, including salts that include other metal cations or ammonium cations. Once cation exchange occurs between the transition metal salt and the acid form of the ionomer, it may be desirable for the acid formed by combination of the liberated proton and the original salt anion to be removed. Thus, it may be useful to use anions that generate volatile or soluble acids, for example chloride or nitrate. Manganese cations may be in any suitable oxidation state, including $Mn^{2+}$, $Mn^{3+}$, and $Mn^{4+}$, but are most typically $Mn^{2+}$. Ruthenium cations may be in any suitable oxidation state, including $Ru^{3+}$ and $Ru^{4+}$, but are most typically $Ru^{3+}$. Cerium cations may be in any suitable oxidation state, including $Ce^{3+}$ and $Ce^{4+}$. Without wishing to be bound by theory, it is believed that the cerium, manganese, or ruthenium cations persist in the polymer electrolyte because they are exchanged with $H^+$ ions from the anion groups of the polymer electrolyte and become associated with those anion groups. Furthermore, it is believed that polyvalent cerium, manganese, or ruthenium cations may form crosslinks between anion groups of the polymer electrolyte, further adding to the stability of the polymer. In some embodiments, the salt may be present in solid form. The cations may be present in a combination of two or more forms including solvated cation, cation associated with bound anion groups of the polymer electrolyte membrane, and cation bound in a salt precipitate. The amount of salt added is typically between 0.001 and 0.5 charge equivalents based on the molar amount of acid functional groups present in the polymer electrolyte, more typically between 0.005 and 0.2, more typically between 0.01 and 0.1, and more typically between 0.02 and 0.05. Further details for combining an anionic copolymer with cerium, manganese, or ruthenium cations can be found in U.S. Pat. Nos. 7,575,534 and 8,628,871, each to Frey et al..

The cerium oxide compound may contain cerium in the (IV) oxidation state, the (III) oxidation state, or both and may be crystalline or amorphous. The cerium oxide may be, for example, $CeO_2$ or $Ce_2O_3$. The cerium oxide may be substantially free of metallic cerium or may contain metallic cerium. The cerium oxide may be, for example, a thin oxidation reaction product on a metallic cerium particle. The cerium oxide compound may or may not contain other metal elements. Examples of mixed metal oxide compounds comprising cerium oxide include solid solutions such as zirconia-ceria and multicomponent oxide compounds such as barium cerate. Without wishing to be bound by theory, it is believed that the cerium oxide may strengthen the polymer by chelating and forming crosslinks between bound anionic groups. The amount of cerium oxide compound added is typically between 0.01 and 5 weight percent based on the total weight of the copolymer, more typically between 0.1 and 2 weight percent, and more typically between 0.2 and 0.3 weight percent. The cerium oxide compound is typically present in an amount of less than 1% by volume relative to the total volume of the polymer electrolyte membrane, more typically less than 0.8% by volume, and more typically less than 0.5% by volume. Cerium oxide may be in particles of any suitable size, in some embodiments, between 1 and 5000 nm, 200-5000 nm, or 500-1000 nm. Further details regarding polymer electrolyte membranes including cerium oxide compounds can be found in U.S. Pat. No. 8,367,267 (Frey et al.).

The present disclosure provides a membrane electrode assembly comprising the polymer electrolyte membrane made from the copolymer of the present disclosure or the ionomer made by a method according to the present disclosure. A membrane electrode assembly (MEA) is the central element of a proton exchange membrane fuel cell, such as a hydrogen fuel cell. Fuel cells are electrochemical cells which produce usable electricity by the catalyzed combination of a fuel such as hydrogen and an oxidant such as oxygen. Typical MEA's comprise a polymer electrolyte membrane (PEM) (also known as an ion conductive membrane (ICM)), which functions as a solid electrolyte. One face of the PEM is in contact with an anode electrode layer and the opposite face is in contact with a cathode electrode layer. Each electrode layer includes electrochemical catalysts, typically including platinum metal. Gas diffusion layers (GDL's) facilitate gas transport to and from the anode and cathode electrode materials and conduct electrical current. The GDL may also be called a fluid transport layer (FTL) or a diffuser/current collector (DCC). The anode and cathode electrode layers may be applied to GDL's in the form of a catalyst ink, and the resulting coated GDL's sandwiched with a PEM to form a five-layer MEA. Alternately, the anode and cathode electrode layers may be applied to opposite sides of the PEM in the form of a catalyst ink, and the resulting catalyst-coated membrane (CCM) sandwiched with two GDL's to form a five-layer MEA. In a typical PEM fuel cell, protons are formed at the anode via hydrogen oxidation and transported across the PEM to the cathode to react with oxygen, causing electrical current to flow in an external circuit connecting the electrodes. The PEM forms a durable, nonporous, electrically non-conductive mechanical barrier between the reactant gases, yet it also passes $H^+$ ions readily.

To make an MEA or CCM, catalyst may be applied to the PEM by any suitable means, including both hand and machine methods, including hand brushing, notch bar coating, fluid bearing die coating, wire-wound rod coating, fluid bearing coating, slot-fed knife coating, three-roll coating, or decal transfer. Coating may be achieved in one application or in multiple applications. A variety of catalysts may be useful. Typically, carbon-supported catalyst particles are used. Typical carbon-supported catalyst particles are 50-90% carbon and 10-50% catalyst metal by weight, the catalyst metal typically comprising Pt for the cathode and Pt and Ru in a weight ratio of 2:1 for the anode. Typically, the catalyst is applied to the PEM or to the FTL in the form of a catalyst ink. Alternately, the catalyst ink may be applied to a transfer

substrate, dried, and thereafter applied to the PEM or to the FTL as a decal. The catalyst ink typically comprises polymer electrolyte material. The copolymer according to the present disclosure and/or made according to the method disclosed herein may be useful as a polymer electrolyte in a catalyst ink composition. The copolymer may have the same or different composition as that used in the polymer electrolyte membrane (e.g., the polymer electrolyte membrane and catalyst ink may use different embodiments of the copolymer disclosed herein.) The catalyst ink typically comprises a dispersion of catalyst particles in a dispersion of the polymer electrolyte. The ink typically contains 5-30% solids (i.e. polymer and catalyst) and more typically 10-20% solids. The electrolyte dispersion is typically an aqueous dispersion, which may additionally contain alcohols and polyalcohols such a glycerin and ethylene glycol. The water, alcohol, and polyalcohol content may be adjusted to alter rheological properties of the ink. The ink typically contains 0-50% alcohol and 0-20% polyalcohol. In addition, the ink may contain 0-2% of a suitable dispersant. The ink is typically made by stirring with heat followed by dilution to a coatable consistency. Further details concerning the preparation of catalyst inks and their use in membrane assemblies can be found, for example, in U.S. Pat. Publ. No. 2004/0107869 (Velamakanni et al.)

To make an MEA, GDL's may be applied to either side of a CCM by any suitable means. Any suitable GDL may be used in the practice of the present invention. Typically the GDL is comprised of sheet material comprising carbon fibers. Typically the GDL is a carbon fiber construction selected from woven and non-woven carbon fiber constructions. Carbon fiber constructions which may be useful in the practice of the present invention may include Toray™ Carbon Paper, SpectraCarb™ Carbon Paper, AFN™ non-woven carbon cloth, and Zoltek™ Carbon Cloth. The GDL may be coated or impregnated with various materials, including carbon particle coatings, hydrophilizing treatments, and hydrophobizing treatments such as coating with polytetrafluoroethylene (PTFE).

In use, the MEA according to the present disclosure is typically sandwiched between two rigid plates, known as distribution plates, also known as bipolar plates (BPP's) or monopolar plates. Like the GDL, the distribution plate is typically electrically conductive. The distribution plate is typically made of a carbon composite, metal, or plated metal material. The distribution plate distributes reactant or product fluids to and from the MEA electrode surfaces, typically through one or more fluid-conducting channels engraved, milled, molded or stamped in the surface(s) facing the MEA(s). These channels are sometimes designated a flow field. The distribution plate may distribute fluids to and from two consecutive MEA's in a stack, with one face directing fuel to the anode of the first MEA while the other face directs oxidant to the cathode of the next MEA (and removes product water), hence the term "bipolar plate." Alternately, the distribution plate may have channels on one side only, to distribute fluids to or from an MEA on only that side, which may be termed a "monopolar plate." A typical fuel cell stack comprises a number of MEA's stacked alternately with bipolar plates.

Another type of electrochemical device is an electrolysis cell, which uses electricity to produce chemical changes or chemical energy. An example of an electrolysis cell is a chlor-alkali membrane cell where aqueous sodium chloride is electrolyzed by an electric current between an anode and a cathode. The electrolyte is separated into an anolyte portion and a catholyte portion by a membrane subject to harsh conditions. In chlor-alkali membrane cells, caustic sodium hydroxide collects in the catholyte portion, hydrogen gas is evolved at the cathode portion, and chlorine gas is evolved from the sodium chloride-rich anolyte portion at the anode.

The polymer electrolyte membrane, in some embodiments, may have a thickness of up to 90 microns, up to 60 microns, or up to 30 microns. A thinner membrane may provide less resistance to the passage of ions. In fuel cell use, this results in cooler operation and greater output of usable energy. Thinner membranes must be made of materials that maintain their structural integrity in use.

In some embodiments, the copolymer of the present disclosure or ionomer made by the method disclosed herein may be imbibed into a porous supporting matrix, typically in the form of a thin membrane having a thickness of up to 90 microns, up to 60 microns, or up to 30 microns. Any suitable method of imbibing the polymer into the pores of the supporting matrix may be used, including overpressure, vacuum, wicking, and immersion. In some embodiments, the copolymer or ionomer is embedded in the matrix upon crosslinking. Any suitable supporting matrix may be used. Typically the supporting matrix is electrically non-conductive. Typically, the supporting matrix is composed of a fluoropolymer, which is more typically perfluorinated. Typical matrices include porous polytetrafluoroethylene (PTFE), such as biaxially stretched PTFE webs. In another embodiment fillers (e.g. fibers) might be added to the polymer to reinforce the membrane.

The copolymer according to the present disclosure and the ionomer made by the method according to the present disclosure may also be useful has a binder for an electrode in other electrochemical cells (for example, lithium ion batteries). To make electrodes, powdered active ingredients can be dispersed in a solvent with the copolymer and coated onto a metal foil substrate, or current collector. The resulting composite electrode contains the powdered active ingredient in the polymer binder adhered to the metal substrate. Useful active materials for making negative electrodes include alloys of main group elements and conductive powders such as graphite. Example of useful active materials for making a negative electrode include oxides (tin oxide), carbon compounds (e.g., artificial graphite, natural graphite, soil black lead, expanded graphite, and scaly graphite), silicon carbide compounds, silicon-oxide compounds, titanium

sulfides, and boron carbide compounds. Useful active materials for making positive electrodes include lithium compounds, such as $Li_{4/3}Ti_{5/3}O_4$, $LiV_3O_8$, $LiV_2O_5$, $LiCo_{0.2}Ni_{0.8}O_2$, $LiNiO_2$, $LiFePO_4$, $LiMnPO_4$, $LiCoPO_4$, $LiMn_2O_4$, and LiCo02. The electrodes can also include electrically conductive diluents and adhesion promoters.

Electrochemical cells including the copolymer or ionomer disclosed herein as a binder can be made by placing at least one each of a positive electrode and a negative electrode in an electrolyte. Typically, a microporous separator can be used to prevent the contact of the negative electrode directly with the positive electrode. Once the electrodes are connected externally, lithiation and delithiation can take place at the electrodes, generating a current. A variety of electrolytes can be employed in a lithium-ion cell. Representative electrolytes contain one or more lithium salts and a charge-carrying medium in the form of a solid, liquid, or gel. Examples of lithium salts include $LiPF_6$, $LiBF_4$, $LiClO_4$, lithium bis(oxalato)borate, $LiN(CF_3SO_2)_2$, $LiN(C_2F_5SO_2)_2$, $LiAsF_6$, $LiC(CF_3SO_2)_3$, and combinations thereof. Examples of solid charge carrying media include polymeric media such as polyethylene oxide, polytetrafluoroethylene, polyvinylidene fluoride, fluorine-containing copolymers, polyacrylonitrile, combinations thereof, and other solid media that will be familiar to those skilled in the art. Examples of liquid charge carrying media include ethylene carbonate, propylene carbonate, dimethyl carbonate, diethyl carbonate, ethyl methyl carbonate, butylene carbonate, vinylene carbonate, fluoroethylene carbonate, fluoropropylene carbonate, gamma-butyrolactone, methyl difluoroacetate, ethyl difluoroacetate, dimethoxyethane, diglyme (bis(2-methoxyethyl) ether), tetrahydrofuran, dioxolane, combinations thereof and other media that will be familiar to those skilled in the art. Examples of charge carrying media gels include those described in U.S. Pat. Nos. 6,387,570 (Nakamura et al.) and 6,780,544 (Noh). The electrolyte can include other additives (e.g., a cosolvent or a redox chemical shuttle).

The electrochemical cells can be useful as rechargeable batteries and can be used in a variety of devices, including portable computers, tablet displays, personal digital assistants, mobile telephones, motorized devices (e.g., personal or household appliances and vehicles), instruments, illumination devices (e.g., flashlights) and heating devices. One or more of the electrochemical cells can be combined to provide battery pack.

Some Embodiments of the Disclosure

In a first embodiment, the present disclosure provides a method of making an ionomer, the method comprising copolymerizing components comprising a fluorinated olefin and a compound represented by formula $CF_2=CFCF_2-(OC_bF_{2b})_c-O-(C_eF_{2e})-SO_2X'$, wherein b is from 2 to 8, c is from 0 to 2, e is from 1 to 8, and X' is -NZH or -OZ, wherein each Z is independently a hydrogen, an alkali metal cation or a quaternary ammonium cation, to form the ionomer.

In a second embodiment, the present disclosure provides the method of the first embodiment, wherein components to be copolymerized are substantially free of a compound represented by formula $CF_2=CFCF_2-(OC_bF_{2b})_c-O-(C_eF_{2e})-SO_2F$, wherein b is from 2 to 8, c is from 0 to 2, e is from 1 to 8.

In a third embodiment, the present disclosure provides the method of the first or second embodiment, wherein the method does not include at least one of coagulating to isolate the ionomer as a solid or hydrolyzing a copolymer formed by copolymerizing a compound represented by formula

$$CF_2=CFCF_2-(OC_bF_{2b})_c-O-(C_eF_2)_e-SO_2F.$$

In a fourth embodiment, the present disclosure provides the method of any one of first to third embodiments, wherein the fluorinated olefin is represented by formula $C(R)_2=CF-Rf$, wherein Rf is fluorine or a perfluoroalkyl having from 1 to 8 carbon atoms and each R is independently hydrogen, fluorine, or chlorine; or a combination thereof, and wherein the components optionally further comprise a perfluoroalkyl vinyl ether or a perfluoroalkoxyalkyl vinyl ether.

In a fifth embodiment, the present disclosure provides the method of any one of the first to fourth embodiments, wherein the components comprise at least one of tetrafluoroethylene, hexafluoropropylene, perfluoromethyl vinyl ether, perfluoropropyl vinyl ether, perfluoro-3-methoxy-n-propyl vinyl ether, tetrafluoropropene, or vinylidene fluoride.

In a sixth embodiment, the present disclosure provides the method of any one of the first to fifth embodiments, wherein copolymerizing is carried out by aqueous emulsion polymerization.

In a seventh embodiment, the present disclosure provides the method of any one of the first to sixth embodiments, wherein the copolymerizing is carried out at a pH higher than 8.

In an eighth embodiment, the present disclosure provides the method of any one of the first to seventh embodiments, wherein copolymerizing is carried out in the presence of a bisulfite or sulfite salt to generate $-SO_2X$ end groups, wherein X is independently -NZH or -OZ, wherein each Z is independently a hydrogen, an alkali-metal cation or a quaternary ammonium cation.

In a ninth embodiment, the present disclosure provides the method of any one of the first to eighth embodiments, wherein b is 2 or 3, c is 0 or 1, and e is 2 or 4.

In a tenth embodiment, the present disclosure provides the method of any one of the first to eighth embodiments,

wherein at least a portion of X groups are -OZ.

In an eleventh embodiment, the present disclosure provides the method of any one of the first to tenth embodiments, wherein Z is an alkali metal cation. In some of these embodiments, Z is sodium.

In a twelfth embodiment, the present disclosure provides the method of any one of the first to eleventh embodiments, wherein the copolymerizing is carried out in the absence of a fluorinated emulsifier.

In a thirteenth embodiment, the present disclosure provides the method of any one of the first to the twelfth embodiments, wherein the ionomer has an $-SO_2X$ equivalent weight of up to 1000.

In a fourteenth embodiment, the present disclosure provides the method of any one of the first to thirteenth embodiments, wherein the ionomer has an $-SO_2X$ equivalent weight of up to 700.

In a fifteenth embodiment, the present disclosure provides the method of any one of the first to fourteenth embodiments, wherein the ionomer comprises anionic species that are not covalently bound to the ionomer, the method further comprising contacting a dispersion of the ionomer with an anion exchange resin having associated hydroxide ions, and exchanging at least a portion of the anionic species with the hydroxide ions to provide an anionic exchanged dispersion.

In a sixteenth embodiment, the present disclosure provides the method of any one of the first to fifteenth embodiments, wherein the ionomer comprises cationic species that are not covalently bound to the ionomer, the method further comprising contacting a dispersion of the ionomer with a cation exchange resin having acidic protons, and exchanging at least a portion of the cationic species with the protons to provide cation-exchanged dispersion.

In a seventeenth embodiment, the present disclosure provides the method of any one of the first to sixteenth embodiments, further comprising spray drying the ionomer.

In an eighteenth embodiment, the present disclosure provides the method of any one of the first to seventeenth embodiments, further comprising post-fluorinating the ionomer.

In a nineteenth embodiment, the present disclosure provides a method of the eighteenth embodiment, further comprising treating the post-fluorinated ionomer with ammonia to provide $-SO_2-NH_2$ groups on the ionomer.

In a twentieth embodiment, the present disclosure provides the method of any one of the first to seventeenth embodiments, wherein at least a portion of X groups are -NZH groups.

In a twenty-first embodiment, the present disclosure provides the method of the nineteenth or twentieth embodiment, further comprising treating the ionomer with a disulfonyl fluoride or disulfonyl chloride.

In a twenty-second embodiment, the present disclosure provides the method of any one of the first to twenty-first embodiments, wherein the components further comprise at least one of ethylene, propylene, isobutylene, ethyl vinyl ether, vinyl benzoate, ethyl allyl ether, cyclohexyl allyl ether, norbornadiene, crotonic acid, an alkyl crotonate, acrylic acid, an alkyl acrylate, methacrylic acid, an alkyl methacrylate, or hydroxybutyl vinyl ether.

In a twenty-third embodiment, the present disclosure provides the method of any one of the first to twenty-second embodiments, wherein the components comprise at least 60 mole % of tetrafluoroethylene based on the total amount of components.

In a twenty-fourth embodiment, the present disclosure provides the method of any one of the first to twenty-third embodiments, whererin the components comprise bisolefins represented by formula

$$X_2C=CY-(CZ_2)_m-(O)_n-R_F-(O)_o-(CZ_2)_p-CY=CX_2,$$

wherein, each of X, Y, and Z is independently fluoro, hydrogen, alkyl, alkoxy, polyoxyalkyl, perfluoroalkyl, perfluoroalkoxy or perfluoropolyoxyalkyl, m and p are independently an integer from 0 to 15, and n, o are independently 0 or 1.

In a twenty-fifth embodiment, the present disclosure provides the method of any one of the first to twenty-fourth embodiments, further comprising combining the ionomer with at least one of cerium cations, manganese cations, ruthenium cations, or a cerium oxide.

In a twenty-sixth embodiment, the present disclosure provides the method of the twenty-fifth embodiment, wherein the at least one of cerium cations, manganese cations, or ruthenium cations are present in a range from 0.2 to 20 percent relative to the amount of sulfonate groups in the ionomer.

In a twenty-seventh embodiment, the present disclosure provides the method of any one of the first to twenty-sixth embodiments, further comprising forming a membrane comprising the ionomer.

In a twenty-eighth embodiment, the present disclosure provides an ionomer made by the method of any one of the first to twenty-seventh embodiments.

In a twenty-ninth embodiment, the present disclosure provides the ionomer of the twenty-eighth embodiment, wherein as polymerized, the ionomer has up to 200 -COOM and -COF end groups per $10^6$ carbon atoms, wherein M is independently an alkyl group, a hydrogen atom, a metallic cation, or a quaternary ammonium cation.

In a thirtieth embodiment, the present disclosure provides the ionomer of the twenty-ninth embodiment, wherein as polymerized, the copolymer has $-SO_2X$ end groups.

In a thirty-first embodiment, the present disclosure provides a polymer electrolyte membrane comprising an

ionomer made by the method of any one of the first to twenty-seventh embodiments.

In a thirty-second embodiment, the present disclosure provides a catalyst ink comprising an ionomer made by the method of any one of the first to twenty-sixth embodiments.

In a thirty-third embodiment, the present disclosure provides a membrane electrode assembly comprising at least one of the polymer electrolyte membrane of the thirty-first embodiment or the catalyst ink of the thirty-second embodiment.

In a thirty-fourth embodiment, the present disclosure provides a binder for an electrode comprising the ionomer made by the method of any one of the first to twenty-sixth embodiments.

In a thirty-fifth embodiment, the present disclosure provides an electrochemical cell comprising the binder of the thirty-fourth embodiment.

In a thirty-sixth embodiment, the present disclosure provides the method of any one of the first to twenty-sixth embodiments, further comprising combining the ionomer with a catalyst to provide a catalyst ink.

In a thirty-seventh embodiment, the present disclosure provides the method of any one of the first to twenty-sixth embodiments, further comprising combining the ionomer with a lithium compound to provide an electrode.

In a thirty-eighth embodiment, the present disclosure provides a copolymer comprising: $-SO_2X$ end groups;

divalent units independently represented by formula:

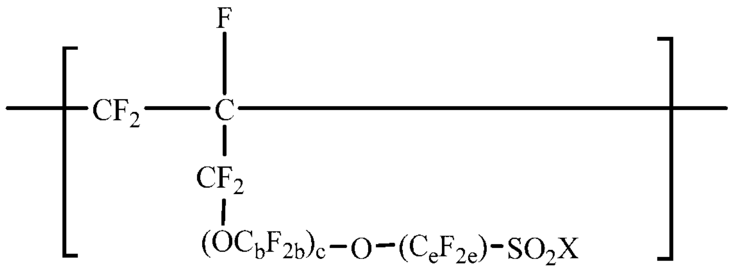

wherein b is 2 to 8, c is 0 to 2, e is 1 to 8, and X is F, -NZH, $-NZSO_2(CF_2)_{1-6}SO_2X'$, $-NZ[SO_2(CF_2)_aSO_2NZ]_{1-10}SO_2(CF_2)_aSO_2X'$, or -OZ, wherein Z is a hydrogen, an alkali-metal cation, or a quaternary ammonium cation, X' is independently -NZH or -OZ, and each a is independently from 1 to 6; and
one or more other, independently selected fluorinated divalent units; wherein the copolymer has an $-SO_2X$ equivalent weight of up to 1000.

In a thirty-ninth embodiment, the present disclosure provides a copolymer comprising: $-SO_2X$ end groups;

divalent units independently represented by formula:

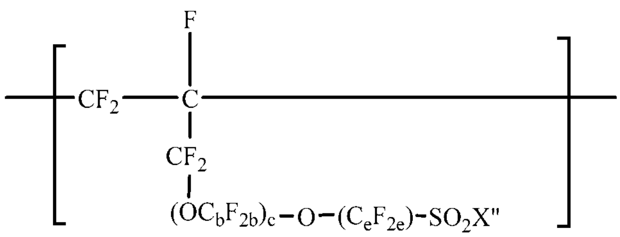

wherein b is 2 to 8, c is 0 to 2, e is 1 to 8, and X" is -F, -NZH, or -OZ , wherein Z is a hydrogen, an alkali-metal cation, or a quaternary ammonium cation; and
one or more other, independently selected fluorinated divalent units;
wherein the copolymer has an $-SO_2X$ equivalent weight of up to 1000.

In a fortieth embodiment, the present disclosure provides the copolymer of the thirty-eighth or thirty-ninth embodiment, wherein at least a portion of X groups are -OZ.

In a forty-first embodiment, the present disclosure provides a copolymer comprising:

divalent units independently represented by formula:

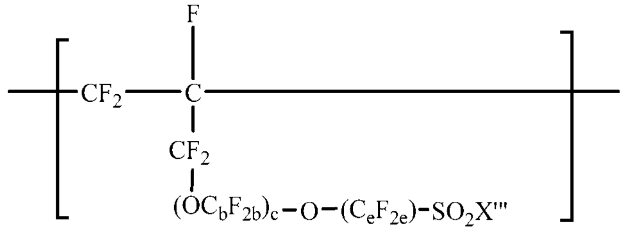

wherein b is 2 to 8, c is 0 to 2, e is 1 to 8, and X''' is -NZH, -$NZSO_2(CF_2)_{1-6}SO_2X'$, or -$NZ[SO_2(CF_2)_aSO_2NZ]_{1-10}SO_2(CF_2)_aSO_2X'$, wherein Z is a hydrogen, an alkali-metal cation, or a quaternary ammonium cation, X' is independently -NZH or -OZ, and each a is independently from 1 to 6; and

one or more other, independently selected fluorinated divalent units.

In a forty-second embodiment, the present disclosure provides the copolymer of any one of the thirty-eighth to forty-first embodiments, wherein the copolymer comprises less than 25 ppm metal ions.

In a forty-third embodiment, the present disclosure provides the copolymer of any one of the thirty-eighth to forty-second embodiments, further comprising fluorinated units derived from at least one of a perfluoroalkyl vinyl ether, perfluoroalkoxyalkyl vinyl ether, or a fluorinated olefin represented by formula $C(R)_2$=CF-Rf, wherein Rf is fluorine or a perfluoroalkyl having from 1 to 8 carbon atoms and each R is independently hydrogen, fluorine, or chlorine.

In a forty-fourth embodiment, the present disclosure provides the copolymer of the forty-third embodiment, wherein the other, independently selected fluorinated divalent units are derived from at least one of tetrafluoroethylene, hexafluorpropylene, perfluoromethyl vinyl ether, perfluoropropyl vinyl ether, perfluoro-3-methoxy-n-propyl vinyl ether, tetrafluoropropene, and vinylidene fluoride.

In a forty-fifth embodiment, the present disclosure provides the copolymer of the forty-fourth embodiment, wherein the other, independently selected fluorinated divalent units comprise -$[CF_2-CF_2]$-.

In a forty-sixth embodiment, the present disclosure provides the copolymer the forty-fifth embodiment, wherein the divalent units comprise at least 60 mole % of -$[CF_2-CF_2]$-, based on the total amount of divalent units in the copolymer.

In a forty-seventh embodiment, the present disclosure provides the copolymer of any one of the thirty-eighth to forty-sixth embodiments, wherein the other, independently selected fluorinated divalent units are derived from bisolefins represented by formula $X_2C=CY-(CZ_2)_m-(O)_n-R_F-(O)_o-(CZ_2)_p-CY=CX_2$, wherein each of X, Y, and Z is independently fluoro, hydrogen, alkyl, alkoxy, polyoxyalkyl, perfluoroalkyl, perfluoroalkoxy or perfluoropolyoxyalkyl, m and p are independently an integer from 0 to 15, and n, o are independently 0 or 1.

In a forty-eighth embodiment, the present disclosure provides the copolymer of the forty-seventh embodiment, wherein X, Y, and Z are each independently fluoro, $CF_3$, $C_2F_5$, $C_3F_7$, $C_4F_9$, hydrogen, $CH_3$, $C_2H_5$, $C_3H_7$, $C_4H_9$.

In a forty-ninth embodiment, the present disclosure provides the copolymer of any one of the thirty-eighth to forty-eighth embodiments, wherein b is 2 or 3, c is 0 or 1, and e is 2 or 4.

In a fiftieth embodiment, the present disclosure provides the copolymer of any one of the thirty-eighth to forty-ninth embodiments, wherein at least a portion of X groups are -OZ.

In a fifty-first embodiment, the present disclosure provides the copolymer of any one of the thirty-eighth to fiftieth embodiments, wherein Z is an alkali metal cation.

In a fifty-second embodiment, the present disclosure provides the copolymer of the fifty-first embodiment, wherein Z is sodium.

In a fifty-third embodiment, the present disclosure provides the copolymer of any one of the thirty-eighth to fifty-second embodiments, wherein the ionomer has an -$SO_2X$ equivalent weight of up to 700.

In a fifty-fourth embodiment, the present disclosure provides the copolymer of any one of the thirty-eighth to fifty-third embodiments, wherein at least a portion of X groups are -NZH groups.

In a fifty-fifth embodiment, the present disclosure provides the copolymer of any one of the thirty-eighth to fifty-fourth embodiments, further comprising divalent units derived from at least one of ethylene, propylene, isobutylene, ethyl vinyl ether, vinyl benzoate, ethyl allyl ether, cyclohexyl allyl ether, norbornadiene, crotonic acid, an alkyl crotonate, acrylic acid, an alkyl acrylate, methacrylic acid, an alkyl methacrylate, or hydroxybutyl vinyl ether.

In a fifty-sixth embodiment, the present disclosure provides the copolymer of any one of the thirty-eighth to fifty-fifth embodiments, wherein the ionomer has up to 200 -COOM and -COF end groups per $10^6$ carbon atoms, wherein M is independently an alkyl group, a hydrogen atom, a metallic cation, or a quaternary ammonium cation.

In a fifty-seventh embodiment, the present disclosure provides a polymer electrolyte membrane comprising the copolymer of any one of the thirty-eighth to fifty-sixth embodiments.

In a fifty-eighth embodiment, the present disclosure provides the polymer electrolyte membrane of the fifty-seventh embodiment, wherein the polymer electrolyte membrane further comprises at least one of cerium cations,

manganese cations, ruthenium cations, or a cerium oxide.

In a fifty-ninth embodiment, the present disclosure provides the polymer electrolyte membrane of the fifty-eighth embodiment, wherein the at least one of cerium cations, manganese cations, or ruthenium cations are present in a range from 0.2 to 20 percent relative to the amount of sulfonate groups in the copolymer.

In a sixtieth embodiment, the present disclosure provides a catalyst ink comprising the copolymer of any one of the thirty-eighth to fifty-sixth embodiments.

In a sixty-first embodiment, the present disclosure provides a membrane electrode assembly comprising at least one of the polymer electrolyte membrane of any one of the fifty-seventh to fifty-ninth embodiments or the catalyst ink of the sixtieth embodiment.

In a sixty-second embodiment, the present disclosure provides a binder for an electrode comprising the copolymer of any one of the thirty-eighth to fifty-sixth embodiments.

In a sixty-third embodiment, the present disclosure provides an electrochemical cell comprising the binder of the sixty-second embodiment.

In a sixty-fourth embodiment, the present disclosure provides a method of making the copolymer of any one of the thirty-eighth to fifty-sixth embodiments, the method comprising copolymerizing components comprising a fluorinated olefin and a compound independently represented by formula $CF_2=CF-CF_2(O-C_bF_{2b})_c-O-(C_eF_{2e})-SO_2X''$, wherein b is 2 to 8, c is 0 to 2, e is 1 to 8, and X" is -F, -NZH or -OZ, wherein Z is a hydrogen, an alkali-metal cation, or a quaternary ammonium cation.

In a sixty-fifth embodiment, the present disclosure provides the method of the sixty-fourth embodiment, wherein copolymerizing is carried out by aqueous emulsion polymerization.

In a sixty-sixth embodiment, the present disclosure provides the method of the sixty-fourth or sixty-fifth embodiments, wherein the copolymerizing is carried out at a pH higher than 8.

In a sixty-seventh embodiment, the present disclosure provides the method of any one of the sixty-fourth to sixty-sixth embodiments, wherein copolymerizing is carried out in the presence of a bisulfite or sulfite salt to generate $-SO_2X$ end groups, wherein X is independently -NZH or -OZ, wherein each Z is independently a hydrogen, an alkali-metal cation or a quaternary ammonium cation.

In a sixty-eighth embodiment, the present disclosure provides the method of any one of the sixty-fourth to sixty-seventh embodiments, wherein the copolymerizing is carried out in the absence of a fluorinated emulsifier.

In a sixty-ninth embodiment, the present disclosure provides the method of any one of the sixty-fourth to sixty-eighth embodiments, wherein the copolymer comprises anionic species that are not covalently bound to the ionomer, the method further comprising contacting a dispersion of the copolymer with an anion exchange resin having associated hydroxide ions, and exchanging at least a portion of the anionic species with the hydroxide ions to provide an anionic exchanged dispersion.

In a seventieth embodiment, the present disclosure provides the method of any one of the sixty-fourth to sixty-ninth embodiments, wherein the copolymer comprises cationic species that are not covalently bound to the copolymer, the method further comprising contacting a dispersion of the copolymer with a cation exchange resin having acidic protons, and exchanging at least a portion of the cationic species with the protons to provide cation-exchanged dispersion.

In a seventy-first embodiment, the present disclosure provides the method of any one of the sixty-fourth to seventieth embodiments, further comprising spray drying the copolymer.

In a seventy-second embodiment, the present disclosure provides the method of any one of the sixty-fourth to seventy-first embodiments, further comprising post-fluorinating the copolymer.

In a seventy-third embodiment, the present disclosure provides a method of the seventy-second embodiment, further comprising treating the post-fluorinated copolymer with ammonia to provide $-SO_2-NH_2$ groups on the copolymer.

In a seventy-fourth embodiment, the present disclosure provides the method of the seventy-third embodiment, further comprising treating the copolymer with a disulfonyl fluoride or disulfonyl chloride.

The following specific, but non-limiting, examples will serve to illustrate the present disclosure.

## EXAMPLES

Unless otherwise noted, all chemicals used in the examples can be obtained from Sigma-Aldrich Corp. (Saint Louis, MO). $CF_2=CF-CF_2-O-CF_2-CF_2SO_2F$ was purchased from Anles (St. Petersburg, Russia).

The following abbreviations are used in this section: L=liters, mL=milliliters, g=grams, min=minutes, rpm=revolutions per minute, sec=seconds, mol %=mole percent, μm=micrometer, mm=millimeter, cm=centimeter, ppm=parts per million.

The indicated results were obtained using the following test methods, unless otherwise noted.

Solid Content

Solid content was determined gravimetrically by placing samples of the dispersions on a heated balance and recording the mass before and after evaporation of solvent. The solid content was the ratio of the initial mass of the sample and the mass of the sample when the mass did not decrease further with continued heating.

Equivalent Weight (EW)

The EW of a copolymer of TFE and $CF_2=CF-CF_2-O-CF_2-CF_2SO_2F$ is calculated by the formula

$$EW = ( (MW_{TFE} \times n) + MW_{MA2S} ) / 1 \text{ equivalent}$$

where $MW_{TFE}$ is the molecular weight of TFE (100 g/mol), n is the ratio of mol % of TFE to mol % of MA2S, $MW_{MA2S}$ is the molecular weight of MA2S (330.1 g/mol). The value of 1 equivalent is used in this formula when considering only $SO_2X$ as charged end groups. For example, if the copolymer is 67 mol % TFE and 33 mol % MA2S, the value of n is 2 and

$$EW = ( (100 \text{ x } 2) + 330.1 ) / 1 = 533.1 \text{ g}$$

Copolymer Composition

$^{19}F$-NMR spectra were used to determine the composition of the purified polymers. A Bruker Avance II 300 spectrometer with a 5 mm Broadband probe was used. Samples of about 13 weight percent polymer dispersion were measured at 60 °C. Signals for the $C\underline{F}_2OC\underline{F}_2C\underline{F}_2O-C\underline{F}_2C\underline{F}_2$ $SO_2F$ were detected: between -70 to -85 ppm, -100 to -110 ppm and -120 to -130 ppm; the $CF_2$'s from the polymer backbone were at about -110 to -120 ppm.

Determination of Carboxyl Endgroups

A Fourier transform infrared spectroscopy (FT-IR) measurement was used to determine the number of carboxyl endgroups per $10^6$ C-atoms in the TFE- $CF_2=CF-CF_2-O-CF_2-CF_2-SO_2F$-polymer.

The measurement were performed by FT-IR in a transmission technique. The measured sample had a film thickness of 100 μm The wave numbers of the COOH peaks of interest are 1776 $cm^{-1}$ and 1807 $cm^{-1}$. The wave number of the C(O)F peak is 1885 $cm^{-1}$. (C(O)F will convert to a carboxyl group). To quantify the amount of carboxyl (C(O)F) endgroups of the polymer two IR spectra were taken. One from the carboxyl containing sample and one from a reference sample (without carboxyl groups).

The number of endgroups per $10^6$ carbon atoms can calculated via equation 1, 2 and 3 for $F_1$, $F_2$ and $F_3$:

$$(\text{peak high} \times F_1) / \text{film thickness [mm]} \quad (1)$$

$$(\text{peak high} \times F_2) / \text{film thickness [mm]} \quad (2)$$

$$(\text{peak high} \times F_3) / \text{film thickness [mm]} \quad (3)$$

with

$F_1$: calculated factor related to the reference spectrum and u = 1776 $cm^{-1}$
$F_2$: calculated factor related to the reference spectrum and $\upsilon$ = 1807 $cm^{-1}$
$F_3$: calculated factor related to the reference spectrum and $\upsilon$ =1885 $cm^{-1}$

The sum of the results from the equations 1 to 3 yield the number of carboxyl endgroups per $10^6$ carbon atoms.

Example 1 (EX-1)

A 4 L polymerization kettle was charged with 2500 g $H_2O$ and 40 g of a 30% solution of $CF_3$-O-$CF_2CF_2CF_2$-O-$CHFCF_2$-$COONH_4$ (prepared as described in U.S. Pat. No. 7,671,112 Hintzer, et al.). The kettle was heated up to 70 °C, and the agitation system was set to 320 rpm. 107 g $CF_2$=CF-$CF_2$-O-$CF_2$-$CF_2SO_2F$ and 11 g of a 30% solution of $CF_3$-O-$CF_2CF_2CF_2$-O-$CHFCF_2$-$COONH_4$ were pre-emulsified into 733 g $H_2O$ under high shear by an IKA ULTRA-TURRAX homogenizer, available from Cole-Parmer, Vernon Hills, IL (24,000 rpm; 10 sec). Afterwards, the pre-emulsion was charged into the reaction kettle and TFE (112 g) was added to reach 6 bar. The polymerization was initiated by feeding 6 g APS (ammonium persulfate, $(NH_4)_2S_2O_8$) in 75 mL $H_2O$.

After pressure drop the feeding of further $CF_2$=CF-$CF_2$-O-$CF_2$-$CF_2SO_2F$ pre-emulsion (450 g $CF_2$=CF-$CF_2$-O-$CF_2$-$CF_2SO_2F$ and 15 g of a 30 % solution of $CF_3$-O-$CF_2CF_2CF_2$-O-$CHFCF_2$-$COONH_4$ in 412 g $H_2O$) and 550 g TFE was continued. The polymerization was stopped after 387 min with a resulting solid content of 19.1%.

The isolated polymer had an EW of 786 (18 mol % $CF_2$=CF-$CF_2$-O-$CF_2$-$CF_2SO_2F$ and 82 mol % TFE). The number of carboxyl end groups was determined by the test method described above to be 980 carboxyl end groups per $10^6$ carbon atoms.

Comparative Example 1

Comparative Example 1 was prepared using the method of Example 1 except that a copolymer of TFE and $F_2C$=CF-O-$CF_2CF_2CF_2CF_2SO_2F$ was made. $F_2C$=CF-O-$CF_2CF_2CF_2CF_2SO_2F$ was prepared according to the method described in U.S. Pat. No. 6,624,328 (Guerra). The isolated polymer was 19 mol % $F_2C$=CF-O-$CF_2CF_2CF_2CF_2SO_2F$ and 81 mol % TFE. The number of carboxyl end groups was determined by the test method described above to be 2000 carboxyl end groups per $10^6$ carbon atoms.

## Claims

1. A copolymer comprising: -$SO_2X$ end groups;

divalent units independently represented by formula:

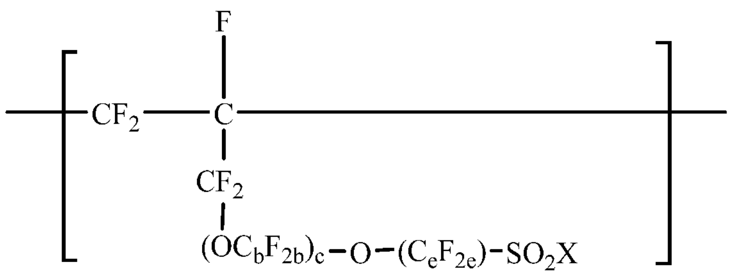

wherein b is 2 to 8, c is 0 to 2, e is 1 to 8, and each X is independently F, -NZH, -$NZSO_2(CF_2)_{1\text{-}6}SO_2X'$, -$NZ[SO_2(CF_2)_aSO_2NZ]_{1\text{-}10}SO_2(CF_2)_aSO_2X'$, or -OZ, wherein Z is independently a hydrogen, an alkali-metal cation or a quaternary ammonium cation, X' is independently -NZH or -OZ, and each a is independently 1 to 6; and one or more other, independently selected fluorinated divalent units;
wherein the copolymer has an -$SO_2X$ equivalent weight of up to 1000.

2. A copolymer comprising:

divalent units independently represented by formula:

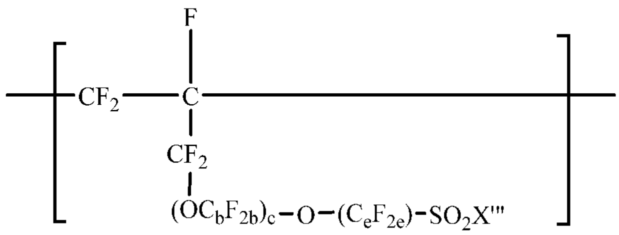

wherein b is 2 to 8, c is 0 to 2, e is 1 to 8, and each X‴ is independently -NZH, $-NZSO_2(CF_2)_{1\text{-}6}SO_2X'$, or $-NZ[SO_2(CF_2)_aSO_2NZ]_{1\text{-}10}SO_2(CF_2)_aSO_2X'$, wherein Z is a hydrogen, an alkali-metal cation or a quaternary ammonium cation, X' is independently -NZH or -OZ and each a is independently 1 to 6; and
one or more other, independently selected fluorinated divalent units.

**3.** The copolymer of claim 1 or 2, wherein b is 2 or 3, c is 0 or 1, and e is 2 or 4.

**4.** The copolymer of any one of claims 1 to 3, wherein the other, independently selected fluorinated divalent units are derived from at least one of a perfluoroalkyl vinyl ether, perfluoroalkoxyalkyl vinyl ether, or a fluorinated olefin represented by formula $C(R)_2$=CF-Rf, wherein Rf is fluorine or a perfluoroalkyl having from 1 to 8 carbon atoms and each R is independently hydrogen, fluorine, or chlorine.

**5.** The copolymer of claim 4, wherein the other, independently selected fluorinated divalent units are derived from at least one of tetrafluoroethylene, hexafluorpropylene, perfluoromethyl vinyl ether, perfluoropropyl vinyl ether, perfluoro-3-methoxy-n-propyl vinyl ether, tetrafluoropropene, and vinylidene fluoride.

**6.** The copolymer of claim 5, wherein the other, independently selected fluorinated divalent units comprise $-[CF_2\text{-}CF_2]-$.

**7.** The copolymer of any one of claims 1 to 6, wherein the copolymer comprises less than 25 ppm metal ions.

**8.** The copolymer of any one of claims 1 to 7, wherein the copolymer has an $-SO_2X$ equivalent weight of up to 700.

**9.** A method of making an ionomer, the method comprising copolymerizing components comprising a fluorinated olefin and a compound represented by formula $CF_2=CFCF_2\text{-}(OC_bF_{2b})_c\text{-}O\text{-}(C_eF_{2e})\text{-}SO_2X'$, wherein b is from 2 to 8, c is from 0 to 2, e is from 1 to 8, and X' is -NZH or -OZ, wherein each Z is independently a hydrogen, an alkali metal cation, or a quaternary ammonium cation.

**10.** The method of claim 9, wherein the fluorinated olefin is represented by formula $C(R)_2$=CF-Rf, wherein Rf is fluorine or a perfluoroalkyl having from 1 to 8 carbon atoms and each R is independently hydrogen, fluorine, or chlorine; or a combination thereof.

**11.** The method of claim 9 or 10, wherein the components comprise at least one of tetrafluoroethylene, hexafluoropropylene, perfluoromethyl vinyl ether, perfluoropropyl vinyl ether, perfluoro-3-methoxy-n-propyl vinyl ether, tetrafluoropropene, or vinylidene fluoride.

**12.** The method of any one of claims 9 to 11, wherein the components comprise at least 60 mole % of tetrafluoroethylene based on the total amount of components.

**13.** The method of any one of claims 9 to 12, wherein the copolymerizing is carried out in the absence of at least one of a fluorinated emulsifier, coagulating to isolate the copolymer as a solid, or hydrolyzing the copolymer.

**14.** An article comprising the copolymer of any one of claims 1 to 8 wherein the article is a polymer electrolyte membrane or a catalyst ink, and wherein the polymer electrolyte membrane optionally further comprises at least one of cerium cations, manganese cations, ruthenium cations, or a cerium oxide.

**15.** A membrane electrode assembly comprising at least one of the polymer electrolyte membrane or the catalyst ink of claim 14.

**Patentansprüche**

1. Ein Copolymer, umfassend: -$SO_2X$-Endgruppen;

   zweiwertige Einheiten, unabhängig dargestellt durch die Formel:

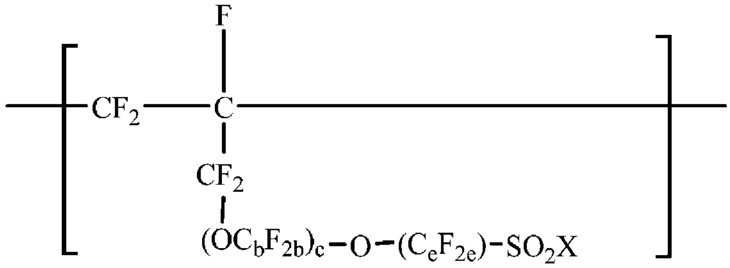

   wobei b 2 bis 8 ist, c 0 bis 2 ist, e 1 bis 8 ist und jedes X unabhängig F, -NZH, -$NZSO_2(CF2)_{1-6}SO_2X'$, -$NZ[SO_2(CF_2)_aSO_2NZ]_{1-10}SO_2(CF_2)_aSO_2X'$ oder -OZ ist, wobei Z unabhängig ein Wasserstoff, ein Alkalimetallkation oder ein quartäres Ammoniumkation ist, X’ unabhängig -NZH oder-OZ ist und jedes a unabhängig 1 bis 6 ist; und
   eine oder mehrere andere, unabhängig ausgewählte fluorierte zweiwertige Einheiten;
   wobei das Copolymer ein -$SO_2X$-Äquivalentgewicht von bis zu 1000 aufweist.

2. Ein Copolymer, umfassend:

   zweiwertige Einheiten, unabhängig dargestellt durch die Formel:

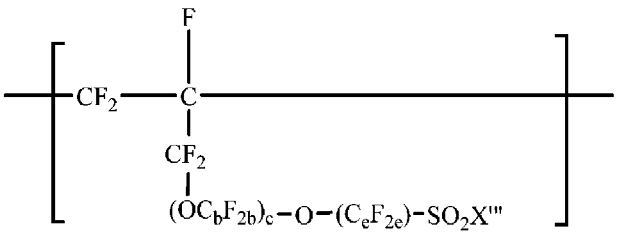

   wobei b 2 bis 8 ist, c 0 bis 2 ist, e 1 bis 8 ist und jedes X’" unabhängig -NZH, -$NZSO_2(CF_2)_{1-6}SO_2X'$ oder -$NZ[SO_2(CF_2)_aSO_2NZ]_{1-10}SO_2(CF_2)_aSO_2X'$ ist, wobei Z ein Wasserstoff, ein Alkalimetallkation oder ein quartäres Ammoniumkation ist, X’ unabhängig -NZH oder -OZ ist und jedes a unabhängig 1 bis 6 ist; und
   eine oder mehrere andere, unabhängig ausgewählte fluorierte zweiwertige Einheiten.

3. Das Copolymer nach Anspruch 1 oder 2, wobei b 2 oder 3 ist, c 0 oder 1 ist und e 2 oder 4 ist.

4. Das Copolymer nach einem der Ansprüche 1 bis 3, wobei die anderen, unabhängig ausgewählten fluorierten zweiwertigen Einheiten von mindestens einem von einem Perfluoralkylvinylether, Perfluoralkoxyalkylvinylether oder einem fluorierten Olefin gemäß Formel $C(R)_2$=CF-Rf abgeleitet sind, wobei Rf Fluor oder ein Perfluoralkyl mit 1 bis 8 Kohlenstoffatomen ist und jedes R unabhängig Wasserstoff, Fluor oder Chlor ist.

5. Das Copolymer nach Anspruch 4, wobei die anderen, unabhängig ausgewählten fluorierten zweiwertigen Einheiten von mindestens einem von Tetrafluorethylen, Hexafluorpropylen, Perfluormethylvinylether, Perfluorpropylvinylether, Perfluor-3-methoxy-n-propylvinylether, Tetrafluorpropen und Vinylidenfluorid abgeleitet sind.

6. Das Copolymer nach Anspruch 5, wobei die anderen, unabhängig ausgewählten fluorierten zweiwertigen Einheiten -$[CF_2$-$CF_2]$- umfassen.

7. Das Copolymer nach einem der Ansprüche 1 bis 6, wobei das Copolymer weniger als 25 ppm Metallionen umfasst.

8. Das Copolymer nach einem der Ansprüche 1 bis 7, wobei das Copolymer ein -$SO_2X$-Äquivalentgewicht von bis zu

700 aufweist.

9. Ein Verfahren zum Herstellen eines Ionomers, wobei das Verfahren ein Copolymerisieren von Komponenten umfasst, die ein fluoriertes Olefin und eine Verbindung gemäß Formel $CF_2$=$CFCF_2$-$(OC_bF_{2b})_c$-O-$(C_eF_{2e})$-$SO_2X'$ umfasst, wobei b von 2 bis 8 ist, c von 0 bis 2 ist, e von 1 bis 8 ist und X' -NZH oder -OZ ist, wobei jedes Z unabhängig ein Wasserstoff, ein Alkalimetallkation oder ein quartäres Ammoniumkation ist.

10. Das Verfahren nach Anspruch 9, wobei das fluorierte Olefin durch Formel $C(R)_2$=CF-Rf dargestellt wird, wobei Rf Fluor oder ein Perfluoralkyl mit 1 bis 8 Kohlenstoffatomen ist und jedes R unabhängig Wasserstoff, Fluor oder Chlor ist; oder eine Kombination davon.

11. Das Verfahren nach Anspruch 9 oder 10, wobei die Komponenten mindestens eines von Tetrafluorethylen, Hexafluorpropylen, Perfluormethylvinylether, Perfluorpropylvinylether, Perfluor-3-methoxy-n-propylvinylether, Tetrafluorpropen oder Vinylidenfluorid umfassen.

12. Das Verfahren nach einem der Ansprüche 9 bis 11, wobei die Komponenten mindestens 60 Mol-% Tetrafluorethylen, basierend auf der Gesamtmenge von Komponenten, umfassen.

13. Das Verfahren nach einem der Ansprüche 9 bis 12, wobei das Copolymerisieren in Abwesenheit mindestens eines von einem fluorierten Emulgator, Koagulieren zum Isolieren des Copolymers als Feststoff oder Hydrolysieren des Copolymers durchgeführt wird.

14. Ein Artikel, umfassend das Copolymer nach einem der Ansprüche 1 bis 8, wobei der Artikel eine Polymerelektrolytmembran oder eine Katalysatortinte ist und wobei die Polymerelektrolytmembran wahlweise ferner mindestens eines von Cerkationen, Mangankationen, Rutheniumkationen oder einem Ceroxid umfasst.

15. Eine Membranelektrodenanordnung, umfassend mindestens eines von der Polymerelektrolytmembran oder der Katalysatortinte nach Anspruch 14.

**Revendications**

1. Copolymère comprenant:

des groupes terminaux -$SO_2X$;
des motifs divalents représentés indépendamment par la formule:

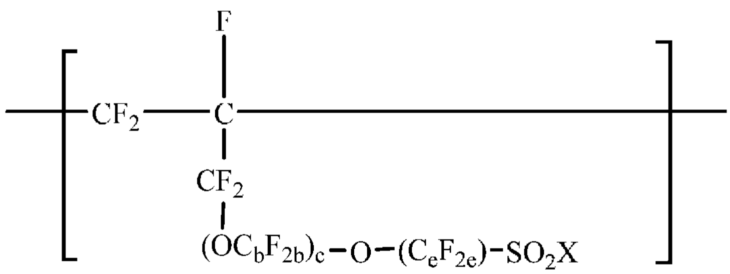

dans lequel b va de 2 à 8, c va de 0 à 2, e va de 1 à 8, et chaque X est indépendamment F, -NZH, -$NZSO_2(CF2)_{1-6}SO_2X'$,
- $NZ[SO_2(CF_2)_aSO_2NZ]_{1-10}SO_2(CF_2)_aSO_2X'$, ou -OZ, dans lequel Z est indépendamment un hydrogène, un cation métal alcalin ou un cation ammonium quaternaire, X' est indépendamment -NZH ou -OZ, et chaque a va indépendamment de 1 à 6; et
un ou plusieurs autres motifs divalents fluorés, indépendamment choisis; dans lequel le copolymère a un poids équivalent de -$SO_2X$ allant jusqu'à 1000.

2. Copolymère comprenant:

des motifs divalents représentés indépendamment par la formule:

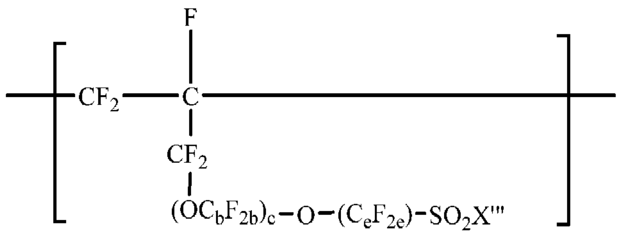

dans lequel b va de 2 à 8, c va de 0 à 2, e va de 1 à 8, et chaque X'" est indépendamment -NZH, $-NZSO_2(CF2)_{1-6}SO_2X'$, ou $-NZ[SO_2(CF_2)_aSO_2NZ]_{1-10}SO_2(CF_2)_aSO_2X'$, dans lequel Z est un hydrogène, un cation métal alcalin ou un cation ammonium quaternaire, X' est indépendamment -NZH ou -OZ et chaque a va indépendamment de 1 à 6; et un ou plusieurs autres motifs divalents fluorés, indépendamment choisis.

**3.** Copolymère selon la revendication 1 ou 2, dans lequel b est 2 ou 3, c est 0 ou 1, et e est 2 ou 4.

**4.** Copolymère selon l'une quelconque des revendications 1 à 3, dans lequel les autres motifs divalents fluorés, indépendamment choisis sont dérivés d'au moins un parmi un éther perfluoroalkyl-vinylique, un éther perfluoroalcoxyalkyl-vinylique, ou une oléfine fluorée représentée par la formule $C(R)_2=CF-Rf$, dans lequel Rf est fluor ou un perfluoroalkyle ayant de 1 à 8 atomes de carbone et chaque R est indépendamment hydrogène, fluor, ou chlore.

**5.** Copolymère selon la revendication 4, dans lequel les autres motifs divalents fluorés, indépendamment choisis sont dérivés d'au moins un parmi tétrafluoroéthylène, hexafluoropropylène, éther perfluorométhyl-vinylique, éther perfluoropropyl-vinylique, éther perfluoro-3-méthoxy-n-propyl-vinylique, tétrafluoropropène, et fluorure de vinylidène.

**6.** Copolymère selon la revendication 5, dans lequel les autres motifs divalents fluorés, indépendamment choisis comprennent $-[CF_2-CF_2]-$.

**7.** Copolymère selon l'une quelconque des revendications 1 à 6, dans lequel le copolymère comprend moins de 25 ppm d'ions métalliques.

**8.** Copolymère selon l'une quelconque des revendications 1 à 7, dans lequel le copolymère a un poids équivalent de $-SO_2X$ allant jusqu'à 700.

**9.** Procédé de fabrication d'un ionomère, le procédé comprenant la copolymérisation de composants comprenant une oléfine fluorée et un composé représenté par la formule $CF_2=CFCF_2-(OC_bF_{2b})_c-O-(C_eF_{2e})-SO_2X'$, dans lequel b va de 2 à 8, c va de 0 à 2, e va de 1 à 8, et X' est -NZH ou -OZ, dans lequel chaque Z est indépendamment un hydrogène, un cation métal alcalin, ou un cation ammonium quaternaire.

**10.** Procédé selon la revendication 9, dans lequel l'oléfine fluorée est représentée par la formule $C(R)_2=CF-Rf$, dans lequel Rf est fluor ou un perfluoroalkyle ayant de 1 à 8 atomes de carbone et chaque R est indépendamment hydrogène, fluor, ou chlore; ou une combinaison de ceux-ci.

**11.** Procédé selon la revendication 9 ou 10, dans lequel les composants comprennent au moins un parmi tétrafluoroéthylène, hexafluoropropylène, éther perfluorométhyl-vinylique, éther perfluoropropyl-vinylique, éther perfluoro-3-méthoxy-n-propyl-vinylique, tétrafluoropropène, ou fluorure de vinylidène.

**12.** Procédé selon l'une quelconque des revendications 9 à 11, dans lequel les composants comprennent au moins 60 % molaires de tétrafluoroéthylène sur la base de la quantité totale de composants.

**13.** Procédé selon l'une quelconque des revendications 9 à 12, dans lequel la copolymérisation est effectuée en l'absence d'au moins un parmi un émulsifiant fluoré, une coagulation pour isoler le copolymère en tant que solide, ou une hydrolyse du copolymère.

**14.** Article comprenant le copolymère selon l'une quelconque des revendications 1 à 8 dans lequel l'article est une membrane électrolytique polymère ou une encre de catalyseur, et dans lequel la membrane électrolytique polymère comprend facultativement en outre au moins un parmi des cations cérium, des cations manganèse, des cations

ruthénium, ou un oxyde de cérium.

**15.** Ensemble électrode à membrane comprenant au moins une parmi une membrane électrolytique polymère ou l'encre de catalyseur selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3282875 A, (Connolly)
- US 3718627 A, Grot
- US 4267364 A, Grot
- US 4273729 A, Krespan
- US 8227139 B, (Watakabe)
- WO 0024709 A, Farnham
- JP 2011174032 B
- US 4358412 A, Ezzell
- US 6255536 B, Worm
- US 6294627 B, Worm
- US 4349650 A, Krespan
- US 4962292 A, Marraccini
- US 6388139 B, Resnick
- US 6624328 B, Guerra
- US 20100311906, Lavallée
- US 7265162 B, Yandrasits
- US 5285002 A
- US 5378782 A, Grootaert
- US 7671112 B, Hintzer
- US 20070015865 A, Hintzer
- US 20060199898 A, Funaki
- US 20070117915 A, Funaki
- US 6429258 B, Morgan
- US 4621116 A, Morgan
- US 20070142541 A, Hintzer
- US 20060223924 A
- US 20070060699 A
- US 20070142513 A, Tsuda
- US 20060281946 A, Morita
- US 2559752 A, Berry
- US 5442097 A, Obermeier
- US 6613941 B, Felix
- US 6794550 B, Hintzer
- US 6706193 B, Burkard
- US 7018541 B, Hintzer
- US 7304101 B, Hintzer
- US 5463021 A, Beyer
- US 5182342 A, Feiring
- US 7214740 B, Lochhaas
- US 20020160272 A, Tanaka
- JP 2011040363 A
- US 4423197 A, Behr
- US 7575534 B
- US 8628871 B
- US 8367267 B, Frey
- US 20040107869 A, Velamakanni
- US 6387570 B, Nakamura
- US 6780544 B, Noh


### Non-patent literature cited in the description


- **GRONWALD, O. et al.** Synthesis of difluoroethyl perfluorosulfonate monomer and its application. *J. Fluorine Chem.,* 2008, vol. 129, 535-540
- **UEMATSU, N. et al.** Synthesis of novel perfluorosulfonamide monomers and their application. *J. Fluorine Chem.,* 2006, vol. 127, 1087-1095
- Modern Fluoropolymers. Wiley & Sons, 1997, 241